# EUROPÄISCHE PATENTSCHRIFT

(11) **EP 3 266 742 B1**
(45) Veröffentlichungstag und Bekanntmachung des Hinweises auf die Patenterteilung: **23.10.2019**
(21) Anmeldenummer: 17179487.8
(22) Anmeldetag: 04.07.2017
(51) Int. Cl.: C01B 25/22, C01B 25/18, B01D 61/42, B01D 61/46, B01D 61/44

(54) **VERFAHREN ZUR HERSTELLUNG VON PHOSPHORSÄURE AUS PHOSPHORHALTIGEN PRIMÄR- UND SEKUNDÄRROHSTOFFEN**
METHOD FOR THE PREPARATION OF PHOSPHORIC ACID FROM PHOSPHORUS-CONTAINING PRIMARY AND SECONDARY RAW MATERIALS
PROCÉDÉ DE FABRICATION D'ACIDE PHOSPHORIQUE À PARTIR DE MATIÈRES PREMIÈRES SECONDAIRES ET PRIMAIRES CONTENANT DU PHOSPHORE

(30) Priorität: 05.07.2016 DE 102016212242
(43) Veröffentlichungstag der Anmeldung: 10.01.2018
(73) Patentinhaber: Technische Universität Bergakademie Freiberg, 09599 Freiberg (DE)
(72) Erfinder: Bertau, Martin, 09599 Freiberg (DE); Fuhrland, Matthias, 01723 Grumbach (DE); Fröhlich, Peter, 09599 Freiberg (DE); Greb, Valentin-Gregor, 09599 Freiberg (DE); Martin, Gunther, 09599 Freiberg (DE)
(74) Vertreter: Kailuweit & Uhlemann Patentanwälte Partnerschaft mbB

(56) Entgegenhaltungen:
- DE-A1- 2 321 882
- DE-B- 1 074 558
- US-A- 3 342 580
- US-A- 3 993 736
- XIAOLIN WANG ET AL: "Phosphate Recovery from Excess Sludge by Conventional Electrodialysis (CED) and Electrodialysis with Bipolar Membranes (EDBM)", INDUSTRIAL & ENGINEERING CHEMISTRY RESEARCH., Bd. 52, Nr. 45, 13. November 2013 (2013-11-13), Seiten 15896-15904, XP055238154, US ISSN: 0888-5885, DOI: 10.1021/ie4014088
- J. J. MACHORRO ET AL: "Electrodialysis of Phosphates in Industrial-Grade Phosphoric Acid", ISRN ELECTROCHEMISTRY, Bd. 64, Nr. 3, 31. Oktober 2013 (2013-10-31), Seiten 89-12, XP055303462, DOI: 10.1155/2013/865727

## Beschreibung

Die Erfindung betrifft ein Verfahren zur Herstellung von Phosphorsäure aus phosphorhaltigen, Primär- und/oder Sekundärrohstoffen mittels einer Kombination aus saurem chemischen Aufschluss und Elektrodialyse sowie Aufreinigung der Rohphosphorsäure. Das Verfahren ermöglicht die Anwendung auf bisher nicht verwertbare Sekundärrohstoffe und ist effizienter als bestehende Verfahren.

Für die Phosphorsäuregewinnung aus primären Rohstoffen werden großtechnisch hauptsächlich Rohphosphate eingesetzt. Dieses sind zum einen magmatische und sedimentäre Apatite wie Hydroxylapatit (Ca₅[OH|(PO₄)₃]) oder Fluoroapatit (Ca₅[F|(PO₄)₃]). Zum anderen wird Phosphorit als Rohstoffquelle genutzt, ein Sedimentgestein, das hauptsächlich aus Apatit, insbesondere Carbonat-Fluorapatit (Ca₅[(F,OH,CO₃)/(PO₄)₃]) und Calcit (Ca[CO₃]) zusammengesetzt ist.

Klassisch erfolgt die Phosphorsäureherstellung durch den sauren Aufschluss der Rohphosphate durch die Einwirkung einer Mineralsäure, wie Schwefel-, Salpeter- oder Salzsäure oder Mischungen dieser Säuren. Das im Mineral kristallchemisch gebundene, unlösliche Phosphat reagiert dabei zu Phosphorsäure. Gleichzeitig entsteht als Nebenprodukt das entsprechende Calciumsulfat, -nitrat oder -chlorid. Das gebildete Calciumsalz wird durch Separationsschritte abgetrennt, die entstandene Rohphosphorsäure gereinigt und je nach Bedarf in mehreren Reinigungsschritten auf die geforderte Reinheit gereinigt.

Die am häufigsten eingesetzte Mineralsäure zum Aufschluss von Rohphosphaten ist Schwefelsäure. Dieses Verfahrensprinzip wird in den Patentschriften AT 263699B**,** AT 269064B**,** AT 242660B**,** AT 242661B**,** AT 301486B**,** AT 3136811B, DE 1964246 C3**,** AT 239193B**,** DE 2649086**,** DE 69132718**,** EP 0169842 B1**,** DE 662211 A**,** DE 1767258 A**,** DE 1667462 A und DE 2529711 A1 offenbart.

Alle chemischen Grundlagen dazu sind literaturbekannt. (P. Becker, Phosphates and phosphoric acid. Raw materials, technology, and economics of the wet process, M. Dekker, New York, 1983.)

Der aus den o. g. Prozessen resultierende Phosphogips (CaSO₄·H₂O) ist aufgrund seines Restphosphatgehaltes nicht vermarktungsfähig. Zusätzlich führt die Belastung der Rohphosphate mit Schwermetallen wie Cadmium und Uran zu einem hohen Gehalt an Schwermetallen in diesem Phosphogips, weshalb diese Nebenprodukte aufwändig entsorgt bzw. kostenintensiv deponiert werden müssen.

Die aus dem Stand der Technik resultierende Rohphosphorsäure wird zunächst kosten- und energieintensiven Reinigungsschritten unterzogen. Danach wird sie konzentriert, wobei der bis dahin lösliche Gipsanteil in der Säure ausfällt.

Weiterhin bekannt sind Verfahren, bei denen Salzsäure oder Salpetersäure zum Aufschluss verwendet werden.

DE 1074558 B offenbart ein Verfahren zur Herstellung von Phosphorsäure aus Tricalciumphosphat-haltigen Erzen oder Mineralien. Dabei wird das Ausgangsmaterial zunächst mit Salzsäure aufgeschlossen und die Phosphorsäure mit Hilfe eines organischen Lösungsmittels extrahiert. Durch Zugabe eines Überschusses an Salzsäure wird die Phosphorsäure in der wässrigen Phase in Lösung gehalten. Im Beispiel 1 erfolgt anschließend eine destillative Trennung des Gemischs aus Salzsäure und Phosphorsäure. Eine Konzentration der Phosphorsäure ist nicht offenbart

X. Wang et al. Industrial and Engineering Chemistry Research, 2013, 52, 15896 - 15904 - beschreibt ein Verfahren zur Aufarbeitung von Phosphathaltigen Abfällen und zur Gewinnung von Phosphaten und Phosphorsäure aus einer Lösung, die durch anaerobe biologische Zersetzung von Klärschlammasche gebildet wird. Diese Lösung enthält Phosphor in Form von Natriumphosphaten, welche in Phosphorsäure und Natriumhydroxid umgesetzt werden.

Die Vorrichtung dazu beinhaltet zwei hintereinander geschalteten Elelktrodialysen. Die konventionelle 2-Kammer-Elektrodialysezelle, dient der Konzentration der Lösung des zu spaltenden Natriumphosphats. Die eigentliche Spaltung des Salzes erfolgt in einer konventionellen 3-Kammer Elektrodialysezelle, in welche die Lösung des Natriumphosphats eingespeist wird. Durch Anlegen eines elektrischen Feldes migrieren die Phosphationen sowie die Natriumionen aus dem Diluat- in einen Säure- und einen Basenstrom. Der Basenstrom führt gebildetes Natriumhydroxid.

DE 1074558 beschreibt ein Verfahren, bei dem stufenweise Tricalciumphosphat (TCP) mit niedrigkonzentrierter Salzsäure umgesetzt wird, sodass Calciumdihydrogenphosphat (Monocalciumphosphat, MCP) und Phosphorsäure entstehen. MCP wird durch ein beschränkt mit Wasser mischbares organisches Lösungsmittel aus der Mutterlösung entfernt und in der organischen Phase durch Zugabe von Salzsäure zu Phosphorsäure umgesetzt. Nach der Reextraktion mit Wasser wird die überschüssige Salzsäure durch Destillation oder Durchleiten eines warmen Gasstromes abgetrennt und somit eine konzentrierte, gereinigte Phosphorsäure gewonnen. Die Herstellung von Phosphorsäure durch Umsetzung mit Salpetersäure wird auch durch *Gilmour* ausführlich erläutert (R. Gilmour, Phosphoric acid. Purification, uses, technology, and economics, 2013.)

Die Phosphorsäureherstellung aus sekundären Rohstoffquellen erfolgt über das Phosphat-Recycling. Besondere Bedeutung als Phosphatquelle haben dabei
- Phosphathaltiges Abwasser
- Klärschlammasche (KSA)
- Tiermehlaschen, Knochenmehlaschen
- Aschen aus der Biomasseverbrennung
- Gärrestaschen
- Phosphorhaltige Industrieabfälle

In den letzten Jahren wurden außerdem eine ganze Reihe neuer Verfahren entwickelt, um die Rückgewinnung von Phosphat aus Klärschlamm (KS) bzw. Klärschlammaschen (KSA) mit der Zielstellung eines wirtschaftlichen Prozesses voranzutreiben. Eine Übersicht darüber ist in Tabelle 1 gegeben.

**Tabelle 1 Übersicht über Verfahren zur Herstellung von Phosphorsäure oder Phosphat aus Klärschlamm**

| **Verfahren** | **Ansatz** | **Produkte** | **Vorteile** | **Nachteile** |
|---|---|---|---|---|
| **LEACHPHOS ^{[1]}** BSH Umweltservice AG | Aufschluss von KSA mit gering konzentrierter Schwefelsäure. Stufenweise Neutralisation führt zur Separierung von Phosphaten. Bei pH-Werten > 9 wird SM belasteter Metallhydroxidschlam ausgefällt | Ca-Al-Fe-Mischphosphate | | • Hoher Chemikalienbedarf (Säure, Base) da keine Regeneration der Aufschlusslösung und starke pH-Anhebung |
| | | | • 70...90 % P-Eluierung | |
| | | | • SM werden hinreichend separiert | • SM-haltiger Metallhydroxidschlamm muss entsorgt werden |
| | | | | • Al-Fe-Phosphate nicht vermarktungsfähig |
| | | | | • Wirtschaftlichkeit des Verfahrens fragwürdig |
| **ECOPHOS ^{[2]}** | Aufschluss von KSA oder anderen Rohphosphaten mit Salzsäure. Weiterverarbeitung der MCP-lösung zu DCP. Unter Zugabe von Schwefelsäure wird Phosphorsäure gewonnen | H₃PO₄ bzw. MCP & DCP, CaCl₂, CaSO₄-Hydrat | • Auch auf Aschen mit niedrigen P-Gehalten anwendbar | |
| | | | | • Nicht marktfähige Produkte Gips (SM-Gehalt unklar), CaCl₂ |
| | | | | • Hoher H₂SO₄-und CaCO₃-Bedarf |
| | | | • Kreislaufführung des Aufschlussmediums (HCl) | |
| | | | | • Verbleib der SM unklar, keine gesonderte Abtrennung |
| | | | | • Bei KSA: Keine Berücksichtigung des gelösten Eisen und Aluminium |
| | | | • H₃PO₄-universales P-Produkt | |
| **TETRAPHOS ^{[3]}** REMONDIS Aqua GmbH | Lösen des Phosphors aus der KSA als MCP mit verdünnter H₃PO₄. und anschließende Abtrennung des mitgelösten Fe und Al. Zugabe von H₂SO₄ zur Bildung von Calciumsulfat und H₃PO₄. Eindampfung der H₃PO₄ auf Produktkonzentration | H₃PO₄, CaSO₄, Fe- und Al-Chloride | | • Nicht marktfähige Produkte Gips (SM-Gehalt unklar) |
| | | | • H₃PO₄-universales P-Produkt | • Hoher H₂SO₄-Bedarf, da keine Regeneration der Aufschlusslösung |
| | | | • Fe- und Al-Chloride zur Phosphatfällung in Klärwerken einsetzbar | • Stoffströme und Ausbeuten anhand der Gehalte von bekannten KSA nicht nachvollziehbar (aus 1.000 kg KSA sollen500 kg H₃PO₄ entstehen) |
| | | | | • Nicht wirtschaftlich auf Ausgangsachen mit niedrigem P-Gehalt anwendbar |
| **Ash Dec ^{[4]}** BAM | Zugabe von Natriumcarbonat und anschließende Thermische Behandlung | CaNaPO₄ -Dünger | • Gute Pflanzenverfüg-barkeit | • Keine vollständige SM-Eliminierung |
| | | | | • Na₂CO₃ hochpreisig |
| | | | | • Hohe Energiekosten |
| | | | | • Ausgangsachen mit niedrigem P-Gehalt führen zu minderwertigen P-Düngern |
| | | | | • Korrosionsprobleme |
| **MEPHREC ^{[5]}** Stadt Nürnberg | Zusammengeben von entwässertem KS, Zement und anderen Zuschlagstoffen und Kompaktierung zu Briketts und anschließende Abtrennung der SM bei 2.000 °C | Kalksiliko-Phosphat | • Gute Pflanzenverfüg-barkeit des Düngers | • Steinkohle, Zement und Zuschlagstoffe benötigt |
| | | | | • Ausgangsaschen mit niedrigem P-Gehalt führen zu minderwertigen P-Düngern |
| | | | • Vollständige SM-Abtrennung, somit auch sehr stark SM belastete KSA einsetzbar | |
| | | | | • Aufwendige Weiterverarbeitung aller Metallphasen (Fe, Cr, Cu, Ni...) |
| | | | • Entwässerter KS direkt einsetzbar | • Anfallender Staub nicht verwertbar (5 Gew.-%) |
| **Stuttgarter Verfahren ^{[6]}** | Lösen des Phosphates aus Faulschlamm mit Schwefelsäure, Zugabe von Citronensäure, Magnesiumoxid und Natronlauge zum Filtrat und anschließende Abtrennung des kristallisierten MAP | MAP-Dünger | | • P-Gewinnungsraten max. 50 % |
| | | | | • SM-Rückstände müssen entsorgt werden |
| | | | • Direkt auf KS anwendbar | • Immenser Chemikalieneinsatz u.a. Citronensäure (ca. 750 €/m³), MgO (1.000 €/t) |
| | | | • SM werden als Sulfide gefällt | |
| | | | | Wirtschaftlichkeit des Verfahrens nicht gegeben (3...4-facher P-Weltmarktpreis) |
| | | | | • Verbleib des schwefelsauer gelaugten KS unklar |
| **SEPHOS ^{[7]}** | Aufschluss der KSA mit Schwefelsäure und anschließende pH-Anhebung führen zur Ausfällung von Aluminiumphosphat. Weiterverarbeitung durch pH-Anhebung (12...14). Durch Zugabe von Calciumchlorid wird Calciumphosphat gewonnen | AlPO₄, TCP | | • Produkte nur im geringen Maße pflanzenverfügbar, daher nicht marktetabliert |
| | | | • 70...90 % P-Eluierung | • Hoher Chemikalienbedarf (Säure, Base) da keine Regeneration der Aufschlusslösung und starke pH-Anhebung |
| | | | | • Wirtschaftlichkeit des Verfahrens nicht gegeben (2...3-facher P-Weltmarktpreis) |
| | | | | • Verbleib der weiteren schwefelsauer gelaugten Metalle, insbesondere Eisen und SM unklar |
| **Pasch ^{[8]}** RWTH Aachen | Aufschluss der KSA mit verdünnter Salzsäure und anschließende Filtration. Mehrstufige Metallextraktion des Filtrats (Fe, Pb, Cd, Cu, Zn). Ausfällung des P-Produktes durch pH-Anhebung | P-Dünger | | • Hoher Chemikalienbedarf (Säure, Base) da keine Regeneration der Aufschlusslösung und starke pH-Anhebung |
| | | | • 70...90 % P-Eluierung | |
| | | | • Dünger ist Pflanzenverfü gbar | |
| | | | | • Wirtschaftlichkeit des Verfahrens nicht gegeben (ca. 2-facher P-Weltmarktpreis) |
| | | | • Abtrennung der meisten SM | |
| | | | | • Keine quantitative SM-Abtrennung, somit nicht alle KSA einsetzbar |
| **Thermphos ^{[9]}** | KSA wird nach dem Wöhler-Verfahren aufgearbeitet. Hierbei werden die enthaltenen Phosphate unter Zugabe von Koks und Quarzsand auf 1.400 °C erhitzt und dabei zu elementaren Phosphor reduziert | Phosphor (P4) | • Hochreines universales P-Produkt (Weißer Phosphor) | • Voraussetzung einer eisenarmen KSA steht im drastischen Widerspruch zur typischen KSA-Zusammensetzung (Fe > 6 Gew.-%) |
| | | | | • Fe und weitere Störstoffe in KSA machen Einsatz für KSA höchst fraglich |
| | | | | • Energieintensiver Prozess |

| | | | | |
|---|---|---|---|---|
| Abkürzungen: MCP Calciumdihydrogenphosphat Ca(H₂PO₄)₂ DCP Calciumhydrogenphosphat CaHPO₄ TCP Tricalciumphosphat Ca₃(PO₄)₂ KS Klärschlamm KSA Klärschlammasche SM Schwermetalle | | | | |

In der Tabelle aufgeführte Quellen:
[1] J. Bühler, S. Schlumberger, Phosphormining aus Klärschlammasche, BSH UMWELTSERVICE AG, 2014. (http://www.umweltbundesamt.de/sites/default/files/medien/378/dokumente/buehler_bsh_I eachphos.pdf)
[2] EcoPhos s.a. (http://www.ecophos.com/#/en/ecological/)
[3] REMONDIS-TetraPhos®-Verfahren, Remondis Aktuell, 2014. (http://www.remondisaktuell.de/remondis-aktuell/032014/wasser/phoenix-aus-der-asche)
[4] L. Hermann, P-recovery from sewage sludge ash - technology transfer from prototype to industrial manufacturing facilities, International conferenceon nutrient recovery from wastewater streams, London 2009.
[5] K. Scheidig, J. Mallon, KLÄRSCHLAMMVERWERTUNG NACH DEM MEPHREC® - VERFAHREN, 7. Klärschlammtage, Fulda, 2011. (http://www.ingitec.de/Praes/KlaerschlammtageFulda2011.pdf)
[6] Weidelener, A.: Phosphorrückgewinnung aus kommunalem Klärschlamm als Magnesium-Ammonium-Phosphat (MAP), Dissertation, Universität Stuttgart, 2010.
[7] J. Pinnekamp et.al, Rückgewinnung eines schadstofffreien, mineralischen Kombinationsdüngers "Magnesiumammoniumphosphat - MAP" aus Abwasser und Klärschlamm, Umweltbundesamt, 2007. (https://www.umweltbundesamt.de/sites/default/files/medien/publikation/long/3256.pdf)
[8] J. Horn, C. Sartorius, F. Tettenborn, Technologievorausschau für Phosphorrecyclingtechnologien, Fraunhofer ISI, 2010. (http://www.umwelttechnik.at/fileadmin/content/RT_Phosphor/GJA_121031_UEberblicksst udie_Phosphor.pdf)
[9] M. Binder, Phosphor-Recycling, green jobs Austria, 2012. (http://www.umwelttechnik.at/fileadmin/content/RT_Phosphor/GJA_121031_UEberblicksst udie_Phosphor.pdf)

Nachteilig weisen alle begutachteten Verfahren mindestens ein Defizit auf, welches den Gesamtprozess wirtschaftlich nicht tragfähig macht.

Oft sind große Mengen an Laugungsmittel notwendig, da keine Regeneration der Aufschlusslösung stattfindet. Außerdem besteht meist ein hoher Basenbedarf, da die Aufschlusslösungen zum Teil vollständig neutralisiert werden. Zusätzlich führt ein sehr hoher Energiebedarf zu einem hohen Kostenaufwand.

Ein weiterer Nachteil der genannten Verfahren besteht oft darin, dass keine vermarktungsfähigen Produkte gebildet werden. Die entstehenden Phosphate sind oft nicht pflanzenverfügbar und als Düngemittel ungeeignet. Nebenprodukte wie Gips oder Calciumchlorid sind wirtschaftlich kaum verwertbar. Außerdem erfolgt durch die genannten Verfahren keine quantitative Schwermetallabtrennung, so dass die Prozesse nicht auf alle Arten von Klärschlammaschen anwendbar sind. Zudem führen Ausgangsaschen mit niedrigem P-Gehalt zu minderwertigen P-Produkten.

In WO 2015/032903 A1 wird ein Verfahren zur Abtrennung von Schwermetallen aus phosphathaltigen Materialien beschrieben, bei dem auch Phosphor zurückgewonnen werden kann. Dabei wird eine Suspension des schwermetall- und phosphathaltigen Materials in den Anodenraum einer elektrochemischen Zelle vorgelegt, der durch eine Kationenaustauschermembran vom Kathodenraum getrennt ist. Nach Anlegen eines elektrischen Feldes, wandern die Schwermetall-Kationen in den Kathodenraum und werden so vom phosphorhaltigen Material getrennt. Nachteilig findet auch eine Migration von Phosphor-Ionen in den Kathodenraum statt. Der verbleibende phosphorhaltige Rückstand kann anschließend ohne weitere Aufreinigung u.a. als Düngemittel verwendet werden.

Der Einsatz der Elektrodialyse zur Gewinnung von Phosphorsäure aus KSA ist bekannt. *Pedersen et al.* setzen in einem modifizierten Elektrodialysestack mit einem rührbaren Anteil Klärschlammasche ein, welche mittels einer niedrig konzentrierten Schwefelsäure gelaugt wird. Nachteilig hierbei ist, dass in der KSA enthaltene Schwermetallionen mit in die Aufschlusslösung übergehen. Durch Anlegen eines elektrischen Feldes und unter Verwendung von Anionen- und Kationenaustauschermembranen erfolgt die Trennung der Anionen, insbesondere Phosphat und enthaltener Kationen, insbesondere Schwermetalle, in verschiedene Kammern. (K. B. Pedersen, L. M. Ottosen, P. E. Jensen, T. Lejon, An optimised method for electrodialytic removal of heavy metals from harbour sediments, Electrochimica Acta 173 (2015) 432-439.*)*)

Als ebenfalls nachteilig erweisen sich zum einen massive Membranscalingerscheinungen (anorganische Ablagerungen auf den Membranen) durch CaSO₄ und schwerlösliche Metallhydroxide, welche durch permanente pH-Anpassung unterbunden werden müssen und die Prozessdauer stark verlängern. Darüber hinaus werden in dem beschriebenen Prozess die Phosphatanionen durch die lonenaustauschermembran transportiert, was zu einer Verdünnung der Phosphorsäure führt.

*Zhang et al.* beschreiben ein Verfahren zur Struvit-Herstellung (Ammoniummagnesiumphosphatdünger) bei welchem zur Aufarbeitung der Rückstandslösung ein Elektrodialyseschritt eingesetzt wird. In diesem wird enthaltenes Phosphat konzentriert und Phosphationen und Chloridionen unter dem Einsatz von monoselektiven Anionenaustauschermembranen simultan getrennt. Die konzentrierte phosphathaltige Lösung wird der Struvitkristallisation zurückgeführt. (Y. Zhang, E. Desmidt, A. van Looveren, L. Pinoy, B. Meesschaert, Van der Bruggen, Bart, Environ. Sci. Technol. 2013, 47, 5888-5895.)

*Machorro et al.* berichten vom Einsatz einer Elektrodialyse zur Aufreinigung technischer Aufschlussphosphorsäure, um deren prinzipielle Durchführbarkeit zu veranschaulichen. Die Wirtschaftlichkeit des beschriebenen Verfahrens, bei welchem Phosphorsäure durch die Membranen in das Konzentrat transportiert wird und Verunreinigungen im Diluat zurückbleiben, ist nicht gegeben. Gleichzeitig werden hier alle veröffentlichten und patentierten Verfahren bis 2013 zum Einsatz der Elektrodialyse zur Aufreinigung von Phosphorsäure aufgeführt. (J. J. Machorro, J. C. Olvera, A. Larios, H. M. Hernández-Hernández, M. E. Alcantara-Garduño, G. Orozco, ISRN Electrochemistry 2013, 2013, 1-12.)

Unter Verwendung von bipolaren Membranen können zudem salzhaltige Ausgangslösungen im 3- bzw. 4-Kammer-Elekrodialyseprozess in Säuren und Basen aufgespalten werden. DE 10 2004 012 334 A1 offenbart das Anlegen eines elektrischen Feldes an eine metallsalzhaltige Ausgangslösung, wobei ein lonentransport einsetzt und Anionen zur Anode und Kationen zur Kathode wandern. Unter zusätzlicher Verwendung von lonenaustauschermembranen (Anionenaustauschermembranen - hohe Permeabilität für Anionen, und Kationenaustauschermembranen - hohe Permeabilität für Kationen) erfolgt eine Auftrennung in die Stoffströme Diluat (abgereicherte Ausgangslösung), Säure und Base. Die alternierend angeordneten Membranen werden in einem Membranstack eingefasst. (K. Ohlrogge (Ed.) Membranen. Grundlagen, Verfahren und industrielle Anwendungen, Wiley-VCH, Weinheim, 2006, 429-465.)

Anwendungsmöglichkeiten für den bipolaren Elektrodialyseprozess sind hinlänglich bekannt und reichen von der Spaltung von Metallsalzen zur Gewinnung anorganischer Säuren und Basen (DE 10 2009 010 264 A1) bis zur Gewinnung organischer Säuren, wie Milchsäure, aus Natriumlactat (EP 0 346 983 A2). So ist auch die elektrodialytische Salzspaltung natriumchloridhaltiger Abwässer in Salzsäure und Natronlauge literaturbekannt. (D. Engel, T. Lehmann, G. Weißland, J. Piccari, Chemie Ingenieur Technik 1994, 66, 686-689.)

Auch zur Feinreinigung technischer Phosphorsäure ist eine Vielzahl von Verfahren publiziert. Zur Aufreinigung von Phosphorsäure zu hohen Qualitäten hat sich besonders die Flüssig-Flüssig-Extraktion mit organischen Lösungsmitteln im Mischabsetzer etabliert. Hierbei werden insbesondere Alkohole (DE 27 48 279 C3**,** DE 197 03 884 C2**,** DE 23 21 882 C3**,** AT 243226 B**,** DE 26 57 189 B2**),** Ketone (AT 247288 B**,** DE 197 03 884 C2**,** AT 243226 B**,** DE 15 67 590 C3**,** EP 2 186 774 B1**),** Ester (DE 23 21 882 C3**,** DE 17 67 442 C3**,** DE 23 34 019 C3**,** DE 10 2008 023 649 A1**)** und Amine (DE 12 77 221 A**)** eingesetzt.

Aufgabe der Erfindung ist es, ein kosten- und energieeffizientes Verfahren zur Herstellung von hochreiner Phosphorsäure sowohl aus phosphorhaltigen Primär- als auch Sekundärrohstoffen bereitzustellen.

Erfindungsgemäß wird die Aufgabe durch ein Verfahren mit den Merkmalen nach Anspruch 1 gelöst. Weitere Ausgestaltungen beinhalten die Unteransprüche 2 bis 11.

In einer Ausführungsform erfolgt die Herstellung von Phosphorsäure aus phosphorhaltigen Primär- und/oder Sekundärrohstoffen mittels Aufschluss der phosphorhaltigen Primär- und/oder Sekundärrohstoffe durch eine einwertige mineralische Aufschlusssäure und Separation von festen Rückständen zum Erhalt einer Aufschlusslösung, enthaltend Rohphosphorsäure und Calcium- und /oder Magnesiumsalze der Aufschlusssäure, wobei die Aufschlusslösung in einen Diluat-Prozesskreislauf einer Elektrodialysevorrichtung mit Anionen- und Kationenaustauschermembranen eingebracht wird, wobei durch Anlegen eines elektrischen Feldes Calcium- und /oder Magnesiumionen und Aufschlusssäureanionen aus der Aufschlusslösung in einen Konzentrat-Prozesskreislauf der Elektrodialysevorrichtung migrieren und dabei von der Rohphosphorsäure im Diluat abgetrennt werden, wobei nach der Abtrennung die Elektrodialyse gestoppt und dass das Diluat weiter konzentriert und aufgearbeitet wird

In einer Ausführungsform erfolgt die Herstellung von Phosphorsäure aus phosphorhaltigen Primär- und/oder Sekundärrohstoffen mittels Aufschluss der phosphorhaltigen Primär- und/oder Sekundärrohstoffe durch eine einwertige mineralische Aufschlusssäure und Separation von festen Rückständen zum Erhalt einer Aufschlusslösung, enthaltend Rohphosphorsäure und Calciumsalze der Aufschlusssäure, wobei die Aufschlusslösung für eine erste Elektrodialyse in einen Diluat-Prozesskreislauf einer Elektrodialysevorrichtung mit Anionen- und Kationenaustauschermembranen eingebracht wird, wobei durch Anlegen eines elektrischen Feldes Calciumionen und Aufschlusssäureanionen aus der Aufschlusslösung in einen Konzentrat-Prozesskreislauf der Elektrodialysevorrichtung migrieren und dabei von der Rohphosphorsäure im Diluat abgetrennt werden, wobei nach der Abtrennung die Elektrodialyse gestoppt und dass das Diluat weiter konzentriert und aufgearbeitet wird.

Erfindungsgemäß werden phosphorhaltige Primär- und/oder Sekundärrohstoffe zur Herstellung von Phosphorsäure eingesetzt.

In einer Ausführungsform werden als phosphorhaltige Primärrohstoffe phosphorhaltige Erze wie Phosphorite, Apatite oder Kollophane und/oder Gesteine, die mehrheitlich (>50 m%) Hydroxylapatit (Ca₅[OH(PO₄)₃]), Fluoroapatit (Ca₅[F(PO₄)₃]) und/oder Phosphorit (Ca₅[F,OH,CO₃(PO₄)₃]) enthalten, und/oder Magnesiumminerale wie Hazenit (KNaMg₂[P0₄]₂·4H₂O) oder Mejillonesit (NaMg₂(PO₃OH)(PO₄)H(OH)·2H₂O) verwendet.

Phosphatfreie Begleitminerale sind Dolomit, Calcit und Kalk.

In einer Ausführungsform sind die phosphorhaltigen Sekundärrohstoffe ausgewählt aus Tier- und Knochenmehlaschen, Klärschlammaschen, technischem Tricalciumphosphat (Ca₃(PO₄)₂), phosphathaltigen Industrieabfällen, technischen Magnesiumphosphaten, thermisch vorbehandelten Struviten (Magnesiumammoniumphophat, MAP, (NH₄)Mg[PO₄]·6H₂O), Leuchtstoffabfällen und/oder Wirtschaftsdünger (Gärrestrückständen, Gülle, Jauche und Festmist).

Vorteilhaft kann das erfindungsgemäße Verfahren sowohl für Primär- als auch für Sekundärrohstoffe angewendet werden.

In einer Ausführungsform wird zunächst das Ausgangsmaterial thermisch vorbehandelt bzw. kalziniert. Dabei werden Wasser und insbesondere organische Bestandteile, aber auch eventuell enthaltener Stickstoff (z.B. im Falle des Struvits) abgetrennt.

In einer Ausführungsform erfolgt die Kalzinierung bei Temperaturen von 50 bis 1.200 °C, bevorzugt 300 bis 850 °C, besonders bevorzugt 500 bis 650 °C in einem sauerstoffhaltigen Gasstrom, bevorzugt im Luft- oder Sauerstoffstrom.

Dem Fachmann sind die anwendbaren Ofentypen, wie der Rohrofen, Drehrohrofen, Induktionsofen, Muffelofen oder Durchlaufofen bekannt. Bevorzugt wird ein Drehrohrofen oder Rohrofen eingesetzt.

Anschließend erfolgt der chemische Aufschluss der phosphorhaltigen Primär- und/oder Sekundärrohstoffe durch eine einwertige mineralische Säure, wobei man eine Aufschlusslösung, enthaltend Rohphosphorsäure und ein- und/oder zweiwertige Salze der Aufschlusssäure erhält.

In kommunalen Klärschlämmen, welche in einer Monoverbrennung (z. B. Wirbelschichtverbrennung unter Sandzugabe) verascht werden, ist das Phosphat zwar in der in Wasser unlöslichen, aber in niedrig konzentrierten mineralischen Säuren gut löslichen, Mineralphase *Whitlockit* gebunden. (Maier, J. Scheffknecht, G: Systematische Untersuchungen zur Rückgewinnung von Phosphor aus Klärschlammaschen unter besonderer Berücksichtigung von Feuerungsparametern. 2007.) *(http:*//*www.fachdokumente.lubw.badenwuerttemberg.de*/*servlet*/*is*/*40276*/*BWT24004SBer.pdf?command*=*downloadContent&filenam e*=*BWT24004SBer.pdf&)*

Auch für die Umsetzung von den zuvor genannten phosphorhaltigen Primär- und/oder Sekundärrohstoffen sind bereits verdünnte Säuren zum Aufschluss geeignet. Es ist literaturbekannt, dass Calcium- und Magnesiumphosphate mit niedrig konzentrierten Säuren zu Phosphorsäure und den entsprechenden Salzen umgesetzt werden.

In einer Ausführungsform werden die phosphathaltigen Primär- und/oder Sekundärrohstoffe vor dem Aufschluss auf Partikelgrößen von < 15 mm, bevorzugt < 5 mm, besonders bevorzugt < 2 mm zerkleinert.

Bevorzugt werden für die Zerkleinerung Brecher (Primär-Kreiselbrecher, Backenbrecher, Horizontal-Prallbrecher, etc.) und Mahlwerke (Schlag-, Prall- und Walzmühlen) zur Zerkleinerung der Mineralien eingesetzt (Walzenschüsselmühlen).

Vorteilhaft ist dieser Grad der Zerkleinerung für den Aufschluss mit einwertigen mineralischen Säuren ausreichend, während der gegenüber dem Stand der Technik bekannte Aufschluss mit Schwefelsäure ("Best Available Techniques for Pollution Prevention and Control in the European Fertilizer Industry", 2000, http://www.productstewardship.eu/fileadmin/user_upload/user_upload_prodstew/documents/ Booklet_nr_4_Production_of_Phosphoric_Acid.pdf) Partikelgrößen von < 150 µm benötigt. Damit wird vorteilhaft der Zerkleinerungsaufwand im erfindungsgemäßen Verfahren stark verringert bzw. entfällt sogar vollständig.

In einer Ausführungsform ist die einwertige mineralische Säure ausgewählt aus Salzsäure und/oder Salpetersäure, bevorzugt Salzsäure.

In einer Ausführungsform ist die einwertige mineralische Säure ein Gemisch aus Salz- und Salpetersäure.

Die Konzentration der eingesetzten Säure beträgt von 0,5 bis 10,0 Mol/kg, vorzugsweise 2,0 bis 4,0 Mol/kg Säure.

Bevorzugt beträgt die Konzentration der eingesetzten Säure 2,5 bis 3,5 Mol/kg.

Die eingesetzte Säuremenge erfolgt im geringen stöchiometrischen Überschuss (1,05 bis 1,10 Äquivalente) in Bezug auf den Phosphorgehalt, um somit den enthaltenen Phosphor in möglichst hoher Ausbringungsrate aus den Verbindungen in die Säure zu überführen. Dabei werden nach folgender Gleichung beispielhaft für 1 Mol TCP (Tricalciumphosphat, Ca₃(PO₄)₂) mindestens 6 Mol Säure benötigt (19,35 Mol/kg).

Ca₃(PO₄)₂ + 6 H⁺ → 3 Ca²⁺ + 2 H₃PO₄

Vorteilhaft beträgt die Phosphoraufschlussrate nahezu 100 %, sodass eine Entphosphatierung des Eingangsstoffes vorgenommen wird. Es verbleibt bei Primärrohstoffen ohne physikalisch-chemische Konzentrierung lediglich ein silikatischer Rückstand, welcher aufgrund der geringen Säurekonzentration und milden Aufschlussbedingungen (Raumtemperatur, Atmosphärendruck) > 70 % der enthaltenen Schwermetalle enthalten kann.

Weiterhin vorteilhaft werden beim chemischen Aufschluss von phosphorhaltigen Leuchtstoffen 60 bis 80 % des enthaltenen Phosphates in Lösung gebracht. Gleichzeitig verbleibt ebenfalls der Hauptanteil enthaltener Schwermetalle, sowie Eisen und Aluminium im Filterrückstand. Im Vergleich zum Aufschluss mit Schwefelsäure, bei welchem sich der hohe Calciumsulfatgehalt negativ auswirkt, können beim Aufschluss mit einwertigen mineralischen Säuren nachfolgend alle silikatischen Rückstände zu vermarktungsfähigen Geopolymeren weiterverarbeitet werden, in welchen enthaltene Schwermetalle nachweislich chemisch gebunden sind. (J. Davidovits, Geopolymer chemistry and applications, Institut Geopolymere, Saint-Quentin, 2011.)

Bei dem aus dem Stand der Technik bekannten Einsatz von Schwefelsäure für Klärschlammaschen, wird die maximale Phosphataufschlussrate nach 12 Stunden erreicht (S. Donatello, D. Tong, C. R. Cheeseman, Waste Management 2010, 30, 1634-1642**.**). Ein Grund für diese langen Umsetzungszeiten findet sich u. a. in der inhibierend wirkenden Bildung von Calciumsulfat.

Bei der Verwendung von Salz- und/oder Salpetersäure entfällt die Calciumsulfatbildung. In einer Ausführung erfolgt der Aufschluss bereits mit einer Reaktionsdauer von 1 bis 60 Minuten, bevorzugt weniger als 25 Minuten, besonders bevorzugt von 5 bis 15 Minuten, was zu einem erheblichen ökonomischen wie auch prozesstechnischen Vorteil führt.

In der Praxis wird zumeist deshalb mit Schwefelsäure gearbeitet, weil Schwefel bei der Erdölgewinnung als Nebenprodukt anfällt und eine preisgünstige Säure liefert. Vorteilhaft wird die im erfindungsgemäßen Verfahren eingesetzte Säure zum Aufschluss im Kreislauf gefahren. Dadurch wird sie nur in dem Maße verbraucht, in dem Phosphorsäure gebildet wird. Es entfällt somit das Erfordernis zur Neutralisation. Hierfür werden im Stand der Technik Basen wie Natriumhydroxid (360 €/t) oder Soda (300 bis 360 €/t) verwendet. Zudem fallen im Stand der Technik Kosten für die Entfernung der Salzfracht aus der Neutralisation sowie Prozess- und andersgearteten Gestehungskosten an. Bei einem Phosphorsäurepreis von ca. 400 €/t für technische Phosphorsäure und ca. 1.000 €/t für hochreine Phosphorsäure mit H₃PO₄-Gehalten von 75 Gew.-% ist schnell ersichtlich, dass der wirtschaftliche Erfolg eines Phosphorrückgewinnungsverfahrens zwingend an eine effiziente Säurerückgewinnung gebunden ist. Andernfalls lässt sich die Phosphorsäureherstellung aus Sekundärrohstoffen nicht wirtschaftlich darstellen.

In herkömmlichen Verfahren erfolgt außerdem oft eine physikalisch-chemische Konzentrierung des phosphathaltigen Erzes durch Flotation. Dieser aufwändige und auch mit Verlust von Phosphat behaftete Schritt sowie das dafür notwendige Feinmahlen des Erzes entfallen beim Aufschluss mit einwertigen mineralischen Säuren.

Um die Bildung von Calciumsulfat-Dihydrat bei der Verwendung von Schwefelsäure als Aufschlusssäure zu verhindern, erfolgt der Phosphataufschluss im Stand der Technik bei Reaktionstemperaturen > 100 °C.

Vorteilhaft kann bei der Verwendung von Salz- und Salpetersäure ohne Energiezufuhr bei Umgebungstemperatur gearbeitet werden.

Vorteilhaft erfolgt der Aufschluss der phosphorhaltigen Primär- und/oder Sekundärrohstoffe bei einer Temperatur von 1 bis 40 °C, bevorzugt bei Umgebungstemperatur von 20 bis 25 °C.

In einer Ausführungsform erfolgt eine Separation der Aufschlusslösung von den festen Rückständen mittels Fest-Flüssig-Trennung. In einer Ausführungsform ist die Fest-Flüssig-Trennung ausgewählt aus Filtration, Sedimentation, Dekantieren oder Zentrifugation. Bevorzugt erfolgt die Filtration mit einem säurebeständigen Filter jeglicher Art, mit einer Porenweite von 0,2 bis 200 µm, bevorzugt 2 bis 50 µm, besonders bevorzugt 5 bis 20 µm.

Die aus dem Aufschluss entstammende Aufschlusslösung enthält hauptsächlich Calcium- und/oder Magnesiumsalze, überschüssige Aufschlusssäure und Rohphosphorsäure. Je nach Phosphatgehalt der Primär- und/oder Sekundärrohstoffe und der Phosphataufschlussrate variiert diese Zusammensetzung und wird ergänzt, insbesondere durch Eisen-, Aluminium-, Magnesium-, Kalium- und Natriumsalze. Die Art der Salze wird durch die einwertige mineralische Aufschlusssäure bestimmt. Insbesondere enthält die aus dem Aufschluss von Klärschlammaschen gewonnene Aufschlusslösung zusätzlich noch Eisen und Aluminium.

Weist die Aufschlusslösung einen Al-Gehalt > 7,0 g/kg und/oder Fe-Gehalt > 2,0 g/kg Aufschlusslösung auf, so kann es zu Aluminium- und/oder Eisen-Phosphat-Ausfällungen im Diluat-Prozesskreislauf der nachfolgenden Elektrodialyse kommen. Diese führen zwangsläufig zu irreversiblen Membranschäden durch Membranscaling-Erscheinungen. Insbesondere treten solche Aluminium- und Eisen-Gehalte bei dem Einsatz von Klärschlammasche auf.

In einer Ausführungsform erfolgt nach dem chemischen Aufschluss und der Fest-Flüssig-Trennung eine extraktive Teilabreicherung von Metallen in Form von Metallverbindungen aus der Aufschlusslösung mittels Flüssig-Flüssig-Extraktion.

In einer Ausführungsform sind die Metalle, in Form von Metallverbindungen, ausgewählt aus Aluminium und/oder Eisen.

In einer Ausführungsform erfolgt die Flüssig-Flüssig-Extraktion der Aufschlusslösung bei Al-Gehalten > 7,0 g/kg und/oder Fe-Gehalten > 2,0 g/kg Aufschlusslösung, um Membranscaling-Erscheinungen durch Aluminium- und Eisenphosphatausfällungen zu minimieren.

Bevorzugt erfolgt die Flüssig-Flüssig-Extraktion mit einem Extraktionsmittel, enthaltend ein oder mehrere organische Extraktionsmittel, ausgewählt aus Di-(2-ethylhexyl)phosphoric acid (DEHPA), Cyanex 923 (Cytec Industries Inc.) und Cyanex 272 (Cytec Industries Inc.) bzw. Gemische aus diesen Extraktionsmitteln. In einer Ausführungsform ist das Extraktionsmittel in einem oder mehreren organischen Lösungsmitteln, bevorzugt Kerosin, gelöst. Diese Lösung wird als Extraktionsmittelgemisch bezeichnet.

In einer Ausführungsform erfolgt die Flüssig-Flüssig-Extraktion in einem Mischabsetzer. Während der Extraktion gehen Aluminium- und/oder Eisenionen in das Extraktionsmittelgemisch über.

Die Anzahl der Extraktionsstufen im Mischabsetzer wird jeweils so gewählt, dass kritische Gehalte für die elektrodialytische Umsetzung (Al-Gehalt > 7,0 g/kg, Fe-Gehalt > 2,0 g/kg) unterschritten werden.

In einer Ausführungsform erfolgt die Flüssig-Flüssig-Extraktion in 1 bis 10 Extraktionsstufen, bevorzugt 1 bis 6 Extraktionsstufen. In einer Ausführungsform erhält man die abgereicherte Aufschlusslösung mit einem Al-Gehalt < 7,0 g/kg und/oder einem Fe-Gehalt < 2,0 g/kg Aufschlusslösung.

Vorteilhaft wird das Extraktionsmittel oder Extraktionsmittelgemisch durch Reextraktion regeneriert, das heißt, von Eisen- und/oder Aluminiumkationen abgereichert.

In einer Ausführungsform erfolgt die Reextraktion des Extraktionsmittels oder Extraktionsmittelgemischs durch mineralische Säuren, bevorzugt Salzsäure.

In einer Ausführungsform beträgt die Menge der eingesetzten mineralischen Säure zur Reextraktion 1 bis 10 Mol/kg Extraktionsmittel oder Extraktionsmittelgemisch, bevorzugt 2 bis 6 Mol/kg, besonders bevorzugt zwischen 2,5 bis 3,5 Mol/kg. Die mineralische Säure zur Reextraktion wird in einer Ausführungsform direkt aus der Säurerückgewinnung mittels bipolarer Elektrodialyse gewonnen. Die entstehende Lösung, enthaltend das Eisen- und/oder Aluminium-Salz der zur Reextraktion verwendeten Säure kann als Fällsalz-Lösung zur Phosphatfällung in der Abwasserbehandlung eingesetzt werden. Für die Prozessökonomie erweist es sich als besonders vorteilhaft, dass keine weiteren Reinigungsschritte notwendig sind und das auf diesem Wege gewonnene Fällsalz oder die Fällsalz-Lösung direkt vermarktet bzw. eingesetzt werden kann.

Erfindungsgemäß erfolgt eine Abtrennung der in der Aufschlusslösung enthaltenen Calcium- und/oder Magnesiumsalze und überstöchiometrischen Aufschlusssäure von der Rohphosphorsäure mittels einer ersten Elektrodialyse mit Diluat- und Konzentrat-Prozesskreislauf.

Erfindungsgemäß wird die Aufschlusslösung für eine erste Elektrodialyse in den Diluat-Prozesskreislauf einer Elektrodialysevorrichtung mit Anionen- und Kationenaustauschermembranen eingebracht.

Durch Anlegen eines elektrischen Feldes migrieren Calcium- und/oder Magnesiumionen und Aufschlusssäureanionen aus der Aufschlusslösung in den Konzentrat-Prozesskreislauf der Elektrodialysevorrichtung und werden dabei von der Rohphosphorsäure im Diluat abgetrennt.

Es erfolgt eine Abtrennung der in der Aufschlusslösung enthaltenen Calcium- und/oder Magnesiumsalze und überstöchiometrischen Aufschlusssäure von der Rohphosphorsäure.

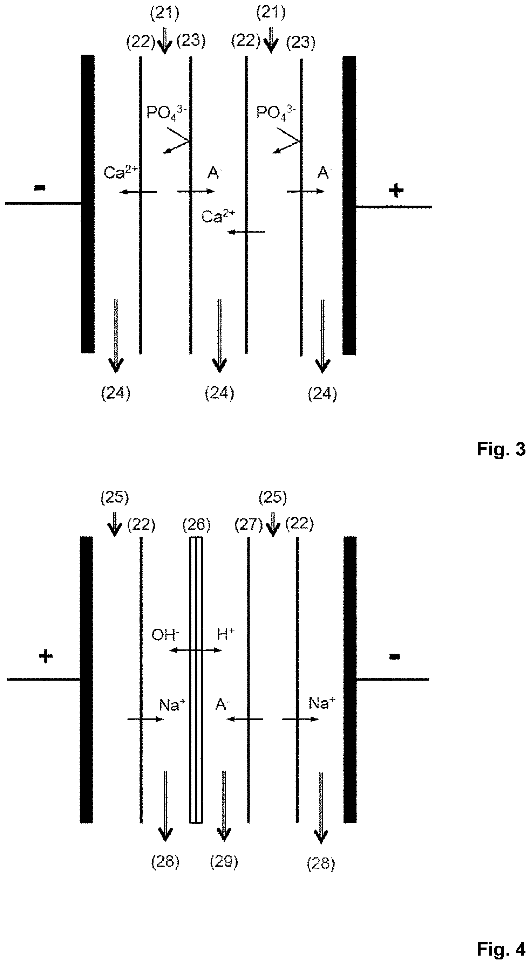

Für die Elektrodialyse werden Membranen (Standard-Kationenaustauschermembran (22), Monoselektive Anionenaustauschermembran (23)) verwendet und Abstandshalter zwischen den Membranen (Spacer), wie in Fig. 3 schematisch dargestellt, angeordnet.

Fig. 3 zeigt anhand einer schematisch dargestellten Elektrodialysezelle den prinzipiellen Ablauf der Elektrodialyse zur Abtrennung von Calcium und/oder Magnesiumionen und Aufschlusssäureanionen von der Rohphosphorsäure der Aufschlusslösung.

In den Strömen (24) wird zunächst Wasser geführt. Mit dem Diluatkreislauf (21) wird die Aufschlusslösung in die Elektrodialysevorrichtung eingebracht, die nach dem Aufschluss von Feststoffen getrennt und ggf. vorher durch Flüssig-Flüssig-Extraktion von Eisen und/oder Aluminium abgereichert wurde.

Erfindungsgemäß wird in der Elektrodialysevorrichtung ein elektrisches Feld angelegt, unter dem Kationen, insbesondere Ca²⁺ und/oder Mg²⁺ und Aufschlusssäureanionen aus der Aufschlusslösung in einen Konzentrat-Prozesskreislauf der Elektrodialysevorrichtung migrieren und dabei von der Rohphosphorsäure im Diluat abgetrennt werden.

Der Separationseffekt beruht auf der unterschiedlichen Wertigkeit der enthaltenen Anionen in der Aufschlusslösung. Die einwertigen Anionen der Aufschlusssäure migrieren aus dem Diluatkreislauf (21) durch Anlegen eines elektrischen Feldes unter Verwendung von monoselektiven Anionenaustauschermembranen (23), welche eine hohe Selektivität für einwertige Anionen aufweisen, in den Konzentratkreislauf (24). Das dreiwertige Phosphat-Anion verbleibt im Diluatkreislauf (21).

Weiterhin migrieren während der Elektrodialyse Kationen, insbesondere einwertige (Na, K) und zweiwertige (Ca, Mg) Kationen durch Kationenaustauschermembranen (22) aus dem Diluatkreislauf (21) in den Calciumsalz-Prozesskreislauf (Konzentrat-Prozesskreislauf (24)) und werden dabei von der Rohphosphorsäure im Diluatkreislauf abgetrennt.

Die noch im Diluatkreislauf verbleibenden Phosphatanionen, sowie die zum Ladungsausgleich verbleibenden Protonen bilden die Rohphosphorsäure.

Erfindungsgemäß wird die Elektrodialyse nach der Abtrennung gestoppt.

In einer Ausführungsform wird die Elektrodialyse beendet, wenn im Diluat ein Calciumgehalt von < 2,0 Gew.-%, bevorzugt < 0,5 Gew.-%, besonders bevorzugt < 0,05 Gew.-% nachgewiesen werden kann.

In einer Ausführungsform werden in einem Elektrodialyse-Membranstack bis zu 100 Elektrodialyse-Zellpaare in Reihe geschaltet.

Zusammengehörige Kreisläufe werden nach dem Durchlaufen der jeweiligen, durch den Abstandshalter erzeugten Kammer im Stack wieder miteinander vereint.

Aus der Elektrodialyse wird nach Beendigung des Prozesses im Diluat-Prozesskreislauf eine Rohphosphorsäure mit einer H₃PO₄-Konzentration in der Rohphosphorsäure von 3 bis 25 Gew.-%, bevorzugt 7 bis 11 Gew.-% erhalten.

Im Konzentrat-Prozesskreislauf (24) wird elektrochemisch eine Lösung erhalten, welche hauptsächlich ein- und zweiwertige Salze, insbesondere Calcium- und/oder Magnesiumsalze, Natrium- und Kaliumsalze, sowie geringen Mengen der nicht in Salzen gebundenen einwertigen Aufschlusssäure und Phosphatsalze enthält.

In einer Ausführungsform enthält die Lösung, die im Konzentrat-Prozesskreislauf der Elektrodialyse geführt wird, nach Beendigung der Elektrodialyse > 90 %, bevorzugt > 95 %, besonders bevorzugt > 98 % der zuvor in der Aufschlusslösung vorhandenen Aufschlusssäureanionen.

Als Membranen für die elektrodialytische Bearbeitung der Aufschlusssäure werden Kationenaustauschermembranen und Anionenaustauschermembranen verwendet. Die Kationenaustauschermembranen entsprechen dem gängigen Standard. Die Anionenaustauschermembranen sind monoselektiv und lassen bevorzugt einwertige Anionen passieren. Als Elektrodenmaterialien werden gängige Werkstoffe, wie u. a. Raney-Nickel oder platiniertes Titan, eingesetzt.

Beim elektrodialytischem Transport von Ionen durch Membranen wird eine große Menge Wasser über die hydratisierten An- und Kationen mittransportiert. So ist beispielsweise 1 Mol CaCl₂ mit 10 Mol H₂O hydratisiert. (J. Kielland, J. Chem. Educ. 1937, 14, 412.)

Dieser Wassertransport bewirkt in Prozessen, in denen die Elektrodialyse zur Konzentrierung oder Stofftrennung eingesetzt wird, einen verdünnenden Effekt, der oftmals nicht erwünscht ist.

Vorteilhaft erfolgt im erfindungsgemäßen Verfahren eine Migration der Calcium- und/oder Magnesiumionen zusammen mit ihren Hydrathüllen aus der Aufschlusslösung heraus. Dabei wird das Wasser mit ausgetragen.

Vorteilhaft zeigt sich im erfindungsgemäßen Verfahren, dass die Phosphorsäure je nach Zusammensetzung der Aufschlusslösung durch die Hydrathüllenwanderung während der Elektrodialyse bereits um Faktor 1,1 bis 4, bevorzugt 1,5 bis 2,5 konzentriert wird. Dies begründet einen erheblichen ökonomischen Vorteil des Gesamtprozesses, da bei der nachfolgenden zwingend erforderlichen Konzentrierung der Phosphorsäure erheblich weniger Wasser abgetrennt werden muss, womit sich das Verfahren somit grundlegend vom Stand der Technik unterscheidet.

Vorteilhaft gelingt in dem erfindungsgemäßen Verfahren die Abtrennung von ein- und zweiwertigen Salzen, insbesondere des Calciums- und/oder Magnesiums, sowie geringen Mengen der nicht in Salzen gebundenen einwertigen Aufschlusssäure von der Rohphosphorsäure bei gleichzeitiger Konzentrierung dieser durch Hydrathüllenwanderung. Dies ist nach dem bisher bekannten Stand der Technik nicht möglich.

Der Effekt der Hydrathüllenwanderung bei Abtrennung des Calciums wurde bislang nicht beschrieben. Vielmehr ist nach Stand der Technik von einer verdünnenden Wirkung auf die Rohphosphorsäure auszugehen. Die Elektroden der Elektrodialysevorrichtung werden während der Elektrodialyse von einem Elektrolyt umspült. Als benötigter Elektrolyt zur Umspülung der Elektroden wird in bisher bekannten technischen Verfahren meist eine 2 bis 5 Gew.-%ige Natriumsulfat-Lösung eingesetzt.

Um im erfindungsgemäßen Verfahren eine Kontamination der Phosphorsäure im Diluat-Prozesskreislauf, insbesondere mit Sulfationen, zu verhindern, wird vorteilhafterweise eine wässrige Lösung einer Phosphorverbindung - insbesondere verdünnte Phosphorsäure - als Elektrolyt eingesetzt, welcher die Elektroden während der Elektrodialyse umspült.

In einer Ausführungsform ist der Elektrolyt, welcher die Elektroden während der Elektrodialyse umspült, eine wässrige Lösung, enthaltend ein Phosphatsalz und/oder Phosphorsäure mit einer Phosphat-Konzentration von 0,5 bis 15 Gew.-%, bevorzugt 2 bis 10 Gew.-%, besonders bevorzugt 4 bis 7 Gew.-%, bezogen auf die Gesamtmasse des Elektrolyten.

Mit zunehmender Prozessdauer können sich insbesondere einwertige Anionen im Elektrolytkreislauf anreichern, sodass die mit einwertigen Anionen beladene Elektrolytlösung nach fortschreitender Prozessdauer durch eine frische Elektrolytlösung ersetzt wird. Dies dient vor allem im Falle von HCl als Aufschlusssäure zur Verhinderung der Bildung von Chlorgas an der Anode. Die verunreinigte Elektrolytlösung, enthaltend Phosphatsalze und/oder Phosphorsäure, kann vorteilhafterweise direkt dem Diluat-Prozesskreislauf wieder zugeführt werden.

Als Elektrolyt kann vorteilhafterweise die Produktphosphorsäure, welche durch Aufreinigung der konzentrierten Rohphosphorsäure erhalten wird, eingesetzt werden.

In einer Ausführungsform weist die nach der elektrodialytischen Separation erhaltene Rohphosphorsäure eine Reinheit von mindestens 95 %, bevorzugt > 97 %, besonders bevorzugt > 98,5 % bzgl. H₃PO₄ auf. Als Hauptverunreinigungen sind zweiwertige und insbesondere dreiwertige Kationen, sowie Sulfationen enthalten.

Erfindungsgemäß wird das Diluat, enthaltend die Rohphosphorsäure, weiter konzentriert und die konzentrierte Rohphosphorsäure zur Produktphosphorsäure aufgearbeitet.

In einer Ausführungsform erfolgt nach der Elektrodialyse eine weitere Konzentrierung der Rohphosphorsäure. Nach dem vorangegangenen Elektrodialyseschritt und der damit verbundenen Separation der Calcium- und/oder Magnesiumsalze und überstöchiometrischen Aufschlusssäure von der Rohphosphorsäure beträgt die H₃PO₄-Konzentration in der Rohphosphorsäure 3 bis 25 Gew.-%, bevorzugt 7 bis 11 Gew.-%.

Je nach Anforderung an die Produktphosphorsäure-Konzentration, ist vor der Feinreinigung eine Konzentrierung der Rohphosphorsäure notwendig.

Die Konzentrierung erfolgt sowohl bei der Herstellung technischer Phosphorsäure ohne anschließende Aufreinigung, als auch bei der Herstellung von Phosphorsäure, welche einer anschließenden extraktiven Aufreinigung unterzogen wird.

Geeignete Technologien für den Prozessschritt der Konzentrierung sind die dem Fachmann bekannten Methoden wie Destillation, Membrandestillation oder Verdampfung.

In einer Ausführungsform erfolgt die Konzentrierung der Rohphosphorsäure mittels Vakuumeindampfung, Fallfilmverdampfung, Membrandestillation und/oder Umkehrosmose.

In einer Ausführungsform erfolgt die Konzentrierung der Rohphosphorsäure auf einen H₃PO₄-Gehalt von 40 bis 70 Gew.-%, bevorzugt 50 bis 70 Gew.-% bezogen auf die Gesamtmasse der Rohphosphorsäure.

Das durch den Prozessschritt abgetrennte Destillat (Wasser) wird vorteilhafterweise in einen der beiden elektrodialytischen Prozessschritte zurückgeführt, oder dient als Reextraktionsmittel bei der Phosphorsäurefeinreinigung.

In einer Ausführungsform erfolgt im nächsten Schritt die Aufreinigung der konzentrierten Rohphosphorsäure mittels Flüssig-Flüssig-Extraktion.

In einer Ausführungsform wird dabei Produktphosphorsäure erhalten, welche die Spezifikation einer hochreinen Phosphorsäure erfüllt. Folgende Phosphorsäure-Spezifikationen werden hierbei mindestens erfüllt:

| **Konzentration H₃PO₄ [Gew.-%]** | **Fremdstoffe** | | | | | |
|---|---|---|---|---|---|---|
| | Fe [ppm] | Sulfat [ppm] | Chlorid [ppm] | Fluorid [ppm] | Pb [ppm] | Ca [ppm] |
| 75...85 | < 30 | < 300 | < 20 | < 20 | < 10 | < 50 |

In einer Ausführungsform erfolgt die Aufreinigung der konzentrierten Rohphosphorsäure durch Flüssig-Flüssig-Extraktion mit mindestens einem organischen Lösungsmittel.

In einer Ausführungsform beträgt die eingesetzte Menge an organischem Lösungsmittel 2 bis 30 Gew.-%, bevorzugt 5 bis 15 Gew.-%, bezogen auf die Masse der zu reinigenden Rohphosphorsäure.

In einer Ausführungsform ist das mindestens ein organisches Lösungsmittel ausgewählt aus Alkohol, Ester, Amin und/oder Keton oder Mischungen dieser.

In einer Ausführungsform ist das organische Lösungsmittel ein Alkohol, bevorzugt 1-Hexanol.

In einem ersten Schritt wird konzentrierte Rohphosphorsäure mit mindestens einem der organischen Lösungsmittel extrahiert, wobei die Phosphorsäure in die organische Phase übergeht. In einer Ausführungsform erfolgt die Extraktion in einer kommerziell verfügbaren Mischabsetzer-Einheit oder Extraktionskolonne.

Die beladene organische Phase wird anschließend mit einer ca. 45 Gew.-%igen hochreinen Phosphorsäure gereinigt. (M. I. Amin, M. M. Ali, H. M. Kamal, A. M. Youssef, M. A. Akl, Hydrometallurgy 2010, 105, 115-119.) Dabei wird ein Verhältnis von organischer Phase zu Phosphorsäure von 0,1 bis 1, bevorzugt 0,2 bis 0,4 eingesetzt. Durch das Waschen der organischen Phase wird ein Großteil der enthaltenen Verunreinigungen, wie zweiwertige und dreiwertige Kationen, sowie Sulfationen entfernt.

Im darauffolgenden Reextraktionsschritt wird die organische Phase mit destilliertem Wasser extrahiert. Dabei wird eine gesäuberte Phosphorsäure, mit einem Gehalt von 25 bis 50 Gew.-%, bevorzugt 35 bis 45 Gew.-% gewonnen. Die Reinheit der Produktphosphorsäure ist abhängig von der Extraktionsstufenanzahl, sowie der Reinheit der Roh- und hochreinen Phosphorsäure im Extraktionsprozess.

In einer Ausführungsform werden 1 bis 5, bevorzugt 1 bis 3 Extraktionsschritte durchgeführt, um eine hochreine Produktphosphorsäure gemäß der in Tabelle 2 aufgeführten Spezifikation zu gewinnen.

Aus dem Stand der Technik sind Reinigungsschritte der Rohphosphorsäure bekannt, die mittels einer 10 bis 20 stufigen Mischabsetzer-Batterie (US 3920797) durchgeführt werden. Die im Vergleich zum Stand der Technik geringe Anzahl an Extraktionsschritten im erfindungsgemäßen Verfahren wird durch die hohe Ausgangsreinheit von mindestens 95 %, bevorzugt > 97 %, besonders bevorzugt > 98,5 % bzgl. H₃PO₄ der Rohphosphorsäure nach der elektrodialytischen Separation ermöglicht.

Die Hauptverunreinigungen, die überwiegend aus Eisen, Aluminium, Calcium, Chlorid und Sulfat bestehen, verbleiben im wässrigen, phosphorsäurehaltigen Extraktionsrückstand (Sumpf).

Vorteilhaft kann der wässrige, phosphorsäurehaltige Extraktionsrückstand als Aufschlusssäure bei der Herstellung von Phosphatdüngern aus Klärschlammaschen, oder zur Herstellung von Düngemitteln verwendet werden.

Die zur Reinigung der organischen Phase eingesetzte hochreine Phosphorsäure kann vorteilhafterweise direkt aus dem Prozess gewonnen werden. Hierfür wird je nach eingesetztem Verhältnis bei der Reinigung ein Teil der hergestellten hochreinen Produktphosphorsäure im Kreislauf zurückgeführt. Das benötigte destillierte Wasser wird bevorzugt aus dem Destillat der Konzentrierung der Phosphorsäure entnommen.

Die Ökonomie des Gesamtprozesses wird im Wesentlichen durch die große Menge an benötigter Aufschlusssäure bestimmt. Vorteilhaft erfolgt deshalb in einer Ausführungsform die Rückgewinnung der einwertigen mineralischen Säure aus dem Konzentrat-Prozesskreislauf mittels bipolarer Elektrodialyse.

In einer Ausführungsform erfolgt zusätzlich die Rückgewinnung der einwertigen mineralischen Säure aus dem Konzentrat-Prozesskreislauf mittels einer zweiten, bipolaren Elektrodialyse.

Die Rückgewinnung der einwertigen mineralischen Säure erfolgt aus der Lösung, die dem Konzentrat-Prozesskreislauf nach Beendigung der ersten Elektrodialyse entnommen wird. Die in diesem Kreislauf geführte Lösung enthält hauptsächlich ein- und zweiwertigen Salze, insbesondere des Calciums und/oder Magnesiums, sowie geringen Mengen der nicht in Salzen gebundenen einwertigen Aufschlusssäure. Außerdem enthalten sind geringe Mengen an Phosphatsalzen, die durch eine geringfügige Durchlässigkeit der monoselektiven Anionenaustauschermembranen für zwei- und dreiwertige Anionen während der ersten Elektrodialyse in den Konzentrat-Prozesskreislauf gelangen.

Im Konzentrat-Prozesskreislauf der ersten Elektrodialyse sind nach derer Beendigung > 85 %, bevorzugt > 95 %, besonders bevorzugt > 98 % der zuvor in der Aufschlusslösung vorhandenen Aufschlusssäureanionen enthalten.

Für die Rückgewinnung der Aufschlusssäure mittels einer zweiten, bipolaren Elektrodialyse wird nicht direkt der Konzentrat-Prozesskreislauf der ersten Elektrodialyse, welcher hauptsächlich Calcium- und/oder Magnesiumsalze enthält, eingesetzt. Bei direkter Verwendung aus der ersten Elektrodialyse würde sich während der zweiten, bipolaren Elektrodialyse in Wasser nur geringfügig lösliches Calciumhydroxid (Löslichkeit: 1,6... 1,7 g/L bei 20 °C) oder Magnesiumhydroxid (Löslichkeit: 9,628·10⁻³ g/L bei 20 °C) bilden, wodurch bereits nach kurzer Prozesszeit erhebliches Membranscaling auftreten würde.

Um dies zu umgehen und statt der niedrig konzentrierten (1,5 bis 3,5 Mol/kg), kaum vermarktungsfähigen Calcium- und/oder Magnesiumsalzlösung ein marktgängiges Nebenprodukt zu erhalten, werden vor der bipolaren Elektrodialyse zur Rückgewinnung der einwertigen mineralischen Säure, Calcium- und/oder Magnesiumionen in Form von Calcium- und/oder Magnesiumhydroxid aus dem Konzentrat-Prozesskreislauf der ersten Elektrodialyse ausgefällt.

In einer Ausführungsform wird vor der Rückgewinnung der einwertigen mineralischen Säure aus dem Konzentrat-Prozesskreislauf mittels bipolarer Elektrodialyse der pH-Wert der Konzentrat-Lösung auf 4 bis 10, bevorzugt 6 bis 8, besonders bevorzugt 6,5 bis 7,5 eingestellt.

In einer Ausführungsform erfolgt die Einstellung des pH-Werts durch Zugabe von Natronlauge einer Konzentration von 1 bis 10 Mol/kg, bevorzugt 2 bis 6 Mol/kg, besonders bevorzugt 2,5 bis 3,5 Mol/kg Natronlauge.

Vorteilhaft werden dabei die in der Lösung des Konzentrat-Prozesskreislaufs vorhandenen Phosphatanionen, sowie Aluminium und Eisen ausgefällt und es bildet sich eine wässrige Suspension. Der Feststoff der Suspension enthält je nach Zusammensetzung des Eingangsstoffes 85 bis 100 Gew.-% Calciumphosphate und/oder Magnesiumphosphate sowie geringe Mengen an Aluminium- und Eisenphosphaten < 15 Gew.-%, bevorzugt < 5 Gew.-%, besonders bevorzugt < 1 Gew.-%.

Nach Abtrennung des Filtrates durch Zentrifugation oder Filtration können die Phosphate vorteilhafterweise wieder dem chemischen Aufschluss zugeführt und somit ohne Verluste im Kreislauf geführt werden.

In einer Ausführungsform, wird der pH-Wert vorteilhaft mittels Natronlauge auf zunächst 1 bis 5, bevorzugt 2 bis 3, besonders bevorzugt 2,2 bis 2,5 angehoben. Die insbesondere beim Einsatz von Klärschlammaschen im erfindungsgemäßen Verfahren entstehenden Aluminium- und/oder Eisenphosphate fallen dabei aus, während das Tricalciumphosphat (TCP) in Lösung bleibt und erst bei höheren pH-Werten ausfällt. Vorteilhaft können damit Aluminium und/oder Eisenphosphate vom TCP getrennt werden, wodurch eine zunehmende Anreicherung von Aluminium und Eisen im Prozess verhindert wird.

Anschließend, insbesondere nach der Abtrennung des TCP aus der Suspension wird der pH-Wert der resultierenden Lösung durch Zugabe von Natronlauge weiter auf > 11 angehoben.

In einer Ausführungsform wird der pH-Wert der resultierenden Lösung durch Zugabe einer bezüglich Calcium und Magnesium stöchiometrischen Menge Natronlauge der Konzentration 1 bis 9 Mol/kg, bevorzugt 2 bis 6 Mol/kg, besonders bevorzugt 2,5 bis 3,5 Mol/kg Natronlauge auf > 11 angehoben. Dabei bildet sich eine wässrige Natriumsalzlösung und ein Feststoff, der vorwiegend aus Calcium- und /oder Magnesiumhydroxid besteht.

In einer Ausführungsform wird der Feststoff von der gebildeten Natriumsalzlösung durch Zentrifugation oder Filtration abgetrennt.

Der abgetrennte Feststoff enthaltend hauptsächlich Calcium- und /oder Magnesiumhydroxid, wird mit Wasser gewaschen. Je nach Intensität der Reinigung des Feststoffs, werden Reinheiten des Calciumhydroxids > 90 %, bevorzugt > 95 %, besonders bevorzugt > 99 % erreicht.

Das Filtrat, welches sich im Falle des Einsatzes von Calciumsalzen aus einer wässrigen Lösung von überwiegend Natriumsalz, -hydroxid, sowie geringen Mengen Calciumsalz und - hydroxid zusammensetzt, wird der bipolaren Elektrodialyse mit Kationenaustauschermembranen (22) und Anionenaustauschermembran (27), und bipolaren Membranen (26) zugeführt, wie in Fig. 4 schematisch dargestellt.

Fig. 4 zeigt anhand einer schematisch dargestellten, bipolaren Elektrodialysezelle den prinzipiellen Ablauf der bipolaren Elektrodialyse. Im Säure-Prozesskreislauf (29) und im Natriumhydroxid-Prozesskreislauf (28) wird Wasser vorgelegt. Der Natriumsalz-Prozesskreislauf (25) enthält eine wässrige Lösung von Natriumionen und einwertigen Aufschlusssäure-Anionen. Diese Anionen wandern mit Anlegen eines elektrischen Feldes durch eine Anionenaustauschermembran (27) hindurch Richtung Anode und reichern sich im Säure-Prozesskreislauf (29) an und bilden mit den durch die bipolare Membran (26) in den Säure-Prozesskreislauf migrierten Protonen wiederum die einwertige mineralische Säure, die vorteilhaft wieder als Aufschlusssäure verwendet werden kann.

Die im Natriumsalz-Prozesskreislauf (25) enthaltenen Natriumionen wandern mit Anlegen eines elektrischen Feldes durch eine Kationenaustauschermembran (22) hindurch Richtung Kathode und reichern sich im Natriumhydroxid-Prozesskreislauf (28) an und bilden mit den durch die bipolare Membran (26) in den Natriumhydroxid-Prozesskreislauf migrierten Hydroxidionen wiederum die Natronlauge, die vorteilhaft wieder zur pH-Anhebung bei der Fällung von Phosphatsalzen und Calciumhydroxid eingesetzt werden kann.

Das abgereicherte Diluat aus dem Natriumsalz-Prozesskreislauf (25) kann vorteilhafterweise wiederum als Waschwasser für das gefällte Calciumhydroxid im Kreislauf geführt werden Während der bipolaren Elektrodialyse werden die Elektroden von einem Elektrolyt umspült. In einer Ausführungsform wird als Elektrolyt, der während der Elektrodialyse die Elektroden umspült, eine niedrig konzentrierte Phosphorsäure mit einer Konzentration von 1 bis 15 Gew.-%, bevorzugt 2 bis 10 Gew.-%, besonders bevorzugt 4 bis 7 Gew.-% verwendet. Zur wirtschaftlichen Prozessfahrweise wird bei einem Natriumsalz-Umsatz von 90 bis 99 %, besonders bevorzugt 95 bis 97 % die elektrodialytische Umsetzung beendet, um ein starkes Absinken der Stromausbeute zu verhindern. Aus dem gleichen Grund wird sowohl die Natriumhydroxid-Konzentration im Natriumhydroxid-(Konzentrat-)Prozesskreislauf, als auch die Säure-Konzentration im Säurekreislauf auf 0,5 bis 10 Mol/kg, bevorzugt 2 bis 6 Mol/kg, besonders bevorzugt 2,5 bis 3,5 Mol/kg begrenzt, um Stromausbeuten > 60 % zu gewährleisten.

In einer Ausführungsform wird die zum Aufschluss von Klärschlammaschen eingesetzte Aufschlusssäure zu > 70 %, bevorzugt > 80 %, besonders bevorzugt > 90 % zurückgewonnen.

In einer Ausführungsform wird die zum Aufschluss aller anderen erfindungsgemäß eingesetzten phosphorhaltigen Primär- und Sekundärrohstoffe verwendete Aufschlusssäure zu > 80 %, bevorzugt > 90 %, besonders bevorzugt > 95 % zurückgewonnen.

In einer Ausführungsform erfolgt, für einen stabilen elektrodialytischen Prozess und um das Risiko von Membranscaling vor allem durch Calcium- und /oder Magnesiumhydroxid zu minimieren, während der zweiten, bipolaren Elektrodialyse eine kontinuierliche Filtration des Natriumhydroxid-Prozesskreislaufs.

In einer Ausführungsform wird die Säurerückgewinnung vorteilhafterweise direkt in einer 5-Kammer-Elektrodialyse durchgeführt. Hierbei wird der Konzentrat-Prozesskreislauf der ersten Elektrodialyse, welcher vor allem Calcium- und /oder Magnesiumsalze enthält, mit einer Natriumchlorid-Lösung zur einwertigen Aufschlusssäure, Natronlauge und insbesondere Calcium- und /oder Magnesiumchlorid-Lösung umgesetzt. Durch Vereinigung der Produktströme von Natronlauge und Calcium- und /oder Magnesiumchloridlösung wird ebenfalls Calcium- und /oder Magnesiumhydroxid als Produkt gewonnen. Das Natriumchloridhaltige Filtrat wird der 5-Kammer-Elektrodialyse zurückgeführt.

In einer Ausführungsform werden im erfindungsgemäßen Verfahren zwei Elektrodialyse-Prozessschritte, zum einen zur Herstellung der Rohphosphorsäure, sowie zur Rückgewinnung der vor allem in den Calcium- und/oder Magnesiumsalzen gebundenen Aufschlusssäure kombiniert, was eine Neuerung gegenüber dem Stand der Technik darstellt.

Weiterhin kann die Elektrodialyse, ein Membranprozess, welcher 90 % des gesamten Energiebedarfs des erfindungsgemäßen Verfahrens benötigt, innerhalb von Sekunden zu- und abgeschaltet werden und kann somit zur Lastregelung von Stromnetzen eingesetzt werden. Das Verfahren kann somit direkt mit erneuerbaren Energien z. B. aus Windkraft oder Photovoltaik betrieben werden und zur Netzstabilität beitragen.

In einer weiteren Ausführungsform wird auf die zweite, bipolare Elektrodialyse zur Rückgewinnung der einwertigen mineralischen Säure verzichtet und die Lösung des Konzentrat-Kreislaufes der ersten Elektrodialyse, enthaltend hauptsächlich ein- und zweiwertige Salze, insbesondere des Calciums- und/oder Magnesiums, sowie geringen Mengen der nicht in Salzen gebundenen einwertigen Aufschlusssäure anderweitig umgesetzt.

In einer Ausführungsform wird insbesondere für Lösungen mit hohem Calciumnitrat-Anteil, welche u.a. bei der Umsetzung von Klärschlammaschen oder technischem Tricalciumphosphat (Ca₃(PO₄)₂) mit Salpetersäure entsteht, ein Kristallisationsprozess angeschlossen.

Hierfür wird die Lösung bei Bedarf zunächst konzentriert. Geeignete Technologien für den Prozessschritt der Konzentrierung sind die dem Fachmann bekannten Methoden wie Destillation, Membrandestillation oder Verdampfung. In einer Ausführungsform erfolgt die Konzentrierung der Rohphosphorsäure mittels Vakuumeindampfung, Fallfilmverdampfung, Membrandestillation und/oder Umkehrosmose.

Nach der Konzentrierung werden anschließend bei Temperaturen < 30 °C, bevorzugt < 10 °C, besonders bevorzugt < 0 °C unter Rühren Calciumnitrat-Kristalle auskristallisiert. Der Prozess der Calciumnitratkristallisation und anschließenden Abtrennung durch Filtration ist dem Fachmann bestens bekannt und wird beispielweise großtechnisch im ODDA-Prozess zur Herstellung von Düngemitteln eingesetzt.

In einer weiteren Ausführungsform wird auf die zweite, bipolare Elektrodialyse zur Rückgewinnung der einwertigen mineralischen Säure ebenfalls verzichtet. Hierbei kann insbesondere für Lösungen mit hohem Magnesiumchlorid-Anteil, welche u.a. bei der Umsetzung von Magnesiumphosphaten oder thermisch vorbehandeltem Struvit mit Salzsäure entsteht, ein Neutralisationsprozess angeschlossen werden.

In einer Ausführungsform wird hierfür der pH-Wert der Lösung mit einer Base erhöht. Prinzipiell eignet sich jede Art von Base wie Natron- und Kalilauge, jedoch besonders Magnesiumhydroxid oder Magnesiumoxid. Bei der Verwendung von Magnesiumhydroxid oder Magnesiumoxid entsteht eine Suspension, welche einen pH-Wert zwischen 2-12, bevorzugt 4-10, besonders bevorzugt 6-8 aufweist. Um ein klares Filtrat zu erhalten, wird bei Bedarf eine Fest:Flüssig-Trennung durchgeführt. Beim Präzipitat handelt es sich hauptsächlich um Magnesiumphosphat, welches vorteilhafterweise einem erneuten Aufschluss zugeführt wird.

Die magnesiumhaltige Lösung oder Suspension kann direkt einer (erneuten) Struvitkristallisation, als notwendige Magnesiumquelle zugeführt werden und ist somit vollständig im Kreislauf fahrbar.

Zur Realisierung der Erfindung ist es auch zweckmäßig, die vorbeschriebenen Ausführungsformen und einzelne Merkmale der Ansprüche zu kombinieren.

### Ausführungsbeispiele

Anhand der aufgeführten Darstellungen und Ausführungsbeispiele soll die Erfindung näher erläutert werden, ohne sie auf diese zu beschränken. Dabei zeigen:
Abb. 1 Schematische Darstellung des Verfahren zur Herstellung von Phosphorsäure aus phosphorhaltigen Primär- und Sekundärrohstoffen, *ohne* Flüssig-Flüssig-Extraktionsschritt zur Abtrennung von Fe und Al.
Abb. 2 Schematische Darstellung des Verfahren zur Herstellung von Phosphorsäure aus phosphorhaltigen Primär- und Sekundärrohstoffen, insbesondere Klärschlammaschen *mit* Flüssig-Flüssig-Extraktionsschritt zur Abtrennung von Fe und Al.
Abb. 3 Schematischer Aufbau der Elektrodialysezelle zur Separation der Rohphosphorsäure aus der Aufschlusslösung mittels Elektrodialyse und prinzipieller Ablauf des Prozessschrittes.
Abb. 4 Schematischer Aufbau der Elektrodialysezelle zur Rückgewinnung der einwertigen mineralischen Säure aus dem Konzentrat-Prozesskreislauf mittels bipolarer Elektrodialyse und prinzipieller Ablauf der Prozessschritte.

### Ausführungsbeispiel 1 - Gewinnung von Phosphorsäure aus technischem Tricalciumphosphat

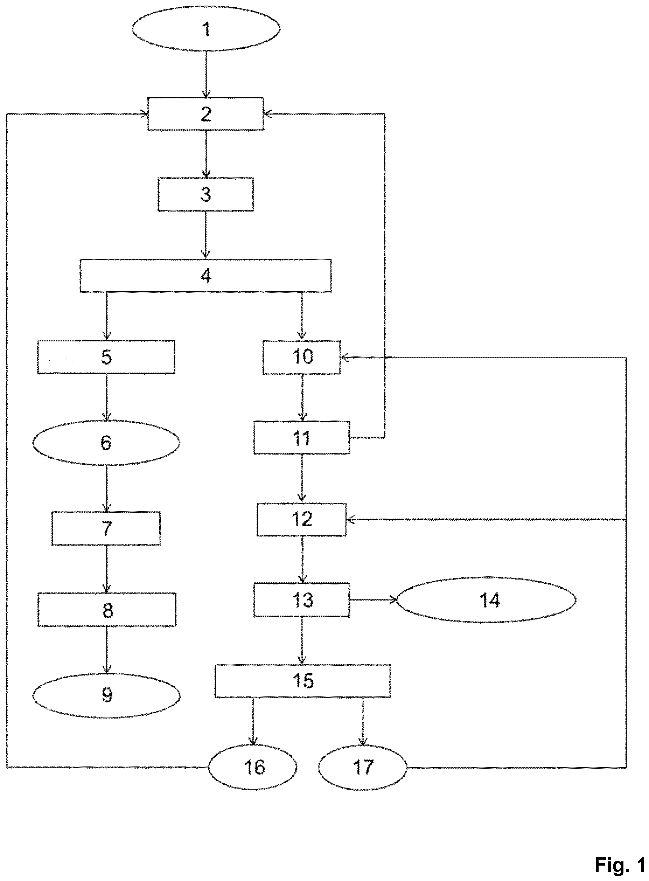

Die Ausführung folgt dem Schema in Fig. 1.

1,4 kg technisches Tricalciumphosphat (1) werden in einem 15 L Aufschlussbehälter mit 10 kg 2,8 molaler Salzsäure zusammengegeben und für ca. 20 Minuten unter ständigem Rühren bei Umgebungstemperatur (25 °C) aufgeschlossen (2). Im Anschluss erfolgt eine Fest-Flüssig-Trennung durch Unterdruckfiltration (3). Die Zusammensetzung des erhaltenen klaren Filtrats (11,4 kg) wurde mittels Röntgenfluoreszenzanalyse (RFA) wie folgt analysiert:

| Hauptelemente | P | Ca | Cl | Fe |
|---|---|---|---|---|
| Gehalt [Gew.-%] | 2,2 | 4,6 | 7,5 | 0,1 |

Der feste Rückstand (30 g) wurde mit 15 g destilliertem Wasser gewaschen und zu > 80 % als Siliciumdioxid analysiert. Das klare Filtrat wird nachfolgend elektrodialytisch (4), in einer Elektrodialysezelle wie in Fig. 3 dargestellt, aufgearbeitet. Der Membranstack, ein Typ 100 (Deukum GmbH) wird mit 10 Zellpaaren (0,1 m² Zellpaargesamtfläche) Neosepta® CMX-, ACS- und Polypropylen Spacern bestückt. Als Elektrolyt werden 5 kg einer hochreinen 5 Gew.-%igen Phosphorsäure eingesetzt. Im Konzentrat werden 6 kg destilliertes Wasser vorgelegt. Bei einer angelegten Spannung von 5 V wird nach einer kurzen Anlaufphase eine konstante Stromstärke von 2,8 A bestimmt. Der Prozess wird beendet, wenn im Diluat ein Calcium-Gehalt < 0,05 Gew.-% nachgewiesen werden kann. Die Rohphosphorsäure (ca. 5,5 kg) setzt sich nach der elektrodialytischen Behandlung wie folgt zusammen:

| Hauptelemente | P | Ca | Cl | Fe |
|---|---|---|---|---|
| Gehalt [Gew.-%] | 3,8 | < 0,05 | < 0,05 | 0,1 |

Der Konzentratkreislauf (11,9 kg) weist folgende Zusammensetzung auf:

| Hauptelemente | P | Ca | Cl | Fe |
|---|---|---|---|---|
| Gehalt [Gew.-%] | 0,4 | 4,4 | 7,2 | <0,1 |

Mittels Rotationsverdampfung werden 5,5 kg der Rohphosphorsäure auf eine Konzentration von 60 Gew.-% eingeengt (5). Die erhaltene konzentrierte Phosphorsäure (6) (1,1 kg) weist eine Reinheit von ca. 98 Gew.-% auf. Um eine hochreine Phosphorsäure zu erhalten erfolgt eine extraktive Aufarbeitung (7).

Hierfür werden in einer 4-stufigen Mischabsetzer Einheit 5 kg der 60 Gew.-%igen Phosphorsäure (Reinheit: 98 Gew.-%) mit 5 kg 1-Hexanol (p.a.) extrahiert. Nach der Abtrennung des Raffinates (0,7 kg) wird die organische Phase mit 1 kg einer 45 Gew.-%igen hochreinen Phosphorsäure vierstufig im Mischabsetzer gereinigt. Die organische Phase wird in vier Stufen mit insgesamt 1,5 kg Reinstwasser reextrahiert. Die erhaltene hochreine Phosphorsäure (ca. 5,5 kg) hat folgende Zusammensetzung:

| Hauptelemente | P | Ca | Cl | Fe |
|---|---|---|---|---|
| Gehalt [Gew.-%] | 12,2 | < 0,001 | < 0,001 | 0,003 |

Nach der Reextraktion der hochreinen Phosphorsäure wird diese abermals im Rotationsverdampfer auf 85 Gew.-% eingeengt (8). Es wird eine Phosphorsäure erhalten, die eine Reinheit > 99,9 Gew.-% aufweist.

Zur Säurerückgewinnung wird der pH-Wert des Konzentratkreislaufes durch Zugabe einer 2,5 molalen Natronlauge (ca. 0,9 kg) auf 7,0 angehoben und damit Aluminium-, Eisenphosphat und TCP gefällt (10). Nach der Filtration (11) wird ein Feststoff gewonnen (Trockensubstanz (TS) 250 g), der nach einer Filterkuchenwäsche (0,5 kg destilliertes Wasser) mit 95 Gew.-% TCP analysiert wurde. Zum Filtrat werden zur nahezu vollständigen Abtrennung von Calciumhydroxid (14) 9,6 kg einer 2,5 molalen Natronlauge hinzugegeben. Der Feststoff wird mittels Zentrifugation abgetrennt und mit 1 kg destilliertem Wasser gewaschen. Nach Trocknung werden 0,9 kg eines Calciumhydroxides mit einer Reinheit von ca. 90 % erhalten.

21,8 kg des gewonnenen Filtrates (Zusammensetzung nachfolgend) werden der bipolaren elektrodialytischen Salzspaltung (15), wie in Abb. 4 dargestellt, unterworfen:

| Hauptelemente | Na | Cl | Ca |
|---|---|---|---|
| Gehalt [Gew.-%] | 2,6 | 3,9 | 0,1 |

Der Membranstack, ein Typ 100 (Deukum GmbH) wird mit 10 Zellpaaren (0,1 m² Zellpaargesamtfläche) Neosepta® CMX-, AMX- und BP1-Membranen, sowie Polypropylen Spacern bestückt. Als Elektrolyt werden 5 kg einer hochreinen 5 Gew.-%igen Phosphorsäure eingesetzt. Im Säure- (5,3 kg) und Konzentrat-Prozesskreislauf (4,9 kg) wird destilliertes Wasser vorgelegt.

Bei einer angelegten Spannung von 17 V wird nach einer kurzen Anlaufphase eine Stromstärke von 6,0 A bestimmt. Nach Beendigung der elektrodialytischen Umsetzung werden im Säurekreislauf ca. 8,6 kg einer ca. 2,8 molalen Salzsäure (16) mit einer Reinheit von 95 Gew.-% (Hauptverunreinigung Natriumchlorid) erhalten. Im Basenkreislauf werden 9,8 kg einer 2,5 molalen Natronlauge (17) mit einer Reinheit von ca. 99 Gew.-% erhalten. Im Diluat verbleiben 13,6 kg wässrige Lösung mit einem Natrium-Gehalt < 1 g/L.

### Ausführungsbeispiel 2 - Gewinnung von Phosphorsäure aus kommunaler Klärschlammasche

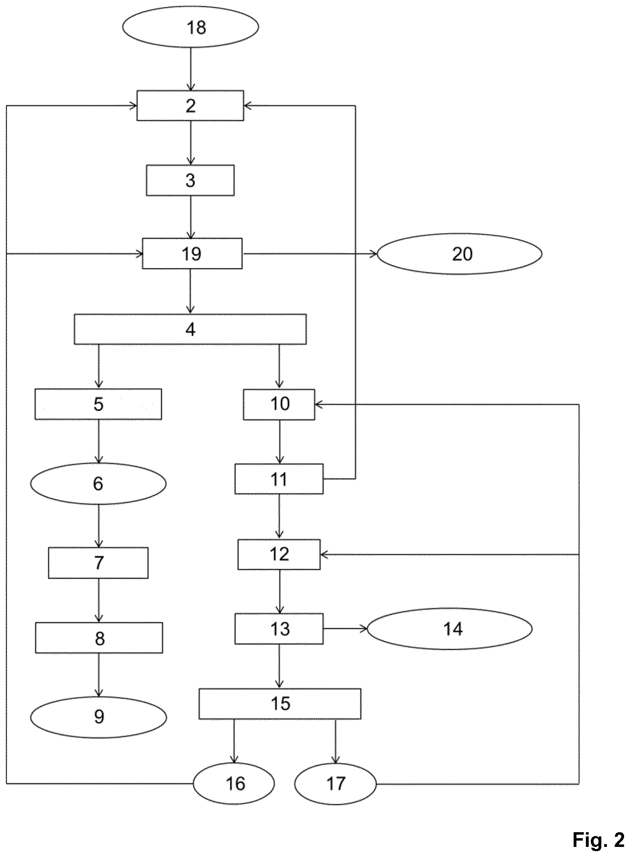

Die Ausführung folgt dem Schema in Fig. 2

| Hauptelemente | P | Ca | Si | Al | Fe | Pb |
|---|---|---|---|---|---|---|
| Gehalt [Gew.-%] | 7,1 | 12,3 | 10,7 | 8,3 | 10,6 | 0,03 |

3,0 kg Klärschlammasche (18) mit der o.g. Zusammensetzung werden in einem 15 L Aufschlussbehälter mit 9 kg 2,8 molaler Salzsäure zusammengegeben und für ca. 20 Minuten unter ständigem Rühren bei Umgebungstemperatur (25 °C) aufgeschlossen (2). Im Anschluss erfolgt eine Fest-Flüssig-Trennung durch Unterdruckfiltration (3).

Der feste silikatische Rückstand (Wasser-Gehalt: 40 Gew.-% TS: 1,8 kg) wurde mit 1,2 kg destilliertes Wasser gewaschen und nachfolgend mittels RFA analysiert:

| Hauptelemente | P | Ca | Cl | Si | Al | Fe | Pb |
|---|---|---|---|---|---|---|---|
| Gehalt [Gew.-%] | 1,9 | 5,0 | 2,7 | 17,9 | 8,4 | 15,3 | 0,04 |

Die Zusammensetzung des erhaltenen klaren Filtrats mit Filterkuchenwäsche (10,4 kg) wurde wie folgt analysiert:

| Hauptelemente | P | Ca | Cl | Si | Al | Fe | Pb |
|---|---|---|---|---|---|---|---|
| Gehalt [Gew.-%] | 1,7 | 2,7 | 6,9 | <0,1 | 0,9 | 0,4 | < 0,005 |

Das Filtrat wurde in einem 4-stufigen Mischabsetzer mit 5 kg Extraktionsmittel, bestehend aus 1,5 kg DEHPA und 3,5 kg Kerosin, extrahiert, um Eisen- und Aluminiumionen zu entfernen (19). Nach der Extraktion ergibt sich folgende für die elektrodialytische Umsetzung geeignete Lösung:

| Hauptelemente | P | Ca | Cl | Si | Al | Fe | Pb |
|---|---|---|---|---|---|---|---|
| Gehalt [Gew.-%] | 1,7 | 2,7 | 6,9 | < 0,1 | 0,3 | 0,03 | < 0,005 |

Das klare Filtrat wird nachfolgend elektrodialytisch aufgearbeitet (4). Der Membranstack, ein Typ 100 (Deukum GmbH) wird mit 10 Zellpaaren (0,1 m² Zellpaargesamtfläche) Neosepta® CMX-, ACS- und Polypropylen Spacern bestückt. Als Elektrolyt werden 5 kg einer hochreinen 5 Gew.-%igen Phosphorsäure eingesetzt.

Im Konzentrat werden 5 kg destilliertes Wasser vorgelegt. Bei einer angelegten Spannung von 5 V wird nach einer kurzen Anlaufphase eine konstante Stromstärke von 2,6 A bestimmt. Der Prozess wird beendet, wenn im Diluat ein Calcium-Gehalt < 0,05 Gew.-% nachgewiesen werden kann. Die Rohphosphorsäure (ca. 5,5 kg) setzt sich nach der elektrodialytischen Behandlung wie folgt zusammen:

| Hauptelemente | P | Ca | Cl | Al | Fe |
|---|---|---|---|---|---|
| Gehalt [Gew.-%] | 2,7 | <0,05 | <0,05 | 0,4 | 0,05 |

Der Konzentratkreislauf (9,9 kg) weist folgende Zusammensetzung auf:

| Hauptelemente | P | Ca | Cl | Al | Fe |
|---|---|---|---|---|---|
| Gehalt [Gew.-%] | 0,3 | 2,8 | 7,2 | 0,1 | <0,01 |

Mittels Rotationsverdampfung (5) werden 5,5 kg der Rohphosphorsäure auf eine Konzentration von 60 Gew.-% eingeengt. Die erhaltene konzentrierte (technische) Phosphorsäure (6) (0,8 kg) weist eine Reinheit von ca. 94 Gew.-% auf. Um eine hochreine Phosphorsäure zu erhalten, erfolgt eine extraktive Aufarbeitung (7).

Hierfür werden in zwei Durchläufen in einer 4-stufigen Mischabsetzer-Einheit 5 kg der 60 Gew.-%igen Phosphorsäure (Reinheit: 94 Gew.-%) mit 5 kg 1-Hexanol (p.a.) extrahiert. Nach der Abtrennung des Raffinates (0,7 kg) wird die organische Phase mit 1 kg einer 45 Gew.-%igen hochreinen Phosphorsäure im Mischabsetzer gereinigt. Die organische Phase wird 4-stufig mit insgesamt 1,5 kg Reinstwasser reextrahiert. Die erhaltene hochreine Phosphorsäure (ca. 5,5 kg) hat folgende Zusammensetzung:

| Hauptelemente | P | Ca | Cl | Al | Fe |
|---|---|---|---|---|---|
| Gehalt [Gew.-%] | 12,0 | <0,001 | <0,001 | 0,002 | 0,001 |

Nach der Reextraktion der hochreinen Phosphorsäure wird diese abermals im Rotationsverdampfer auf 85 Gew.-% eingeengt (8). Es wird eine Phosphorsäure (9) erhalten, die eine Reinheit > 99,9 Gew.-% aufweist.

Zur Säurerückgewinnung wird der pH-Wert des Konzentratkreislaufes durch Zugabe einer 2,5 molalen Natronlauge (ca. 0,6 kg) auf ca. pH 7,0 angehoben um Aluminium- und Eisenphosphat und TCP zu fällen (10). Nach der Filtration (11) wird ein Feststoff gewonnen (TS: 160 g), der nach einer Filterkuchenwäsche (0,25 kg destilliertes Wasser) hauptsächlich als TCP (90 Gew.-%) und Aluminiumphosphat (4 Gew.-%) analysiert wurde. Zum Filtrat werden zur nahezu vollständigen Abtrennung/ Fällung (12) von Calciumhydroxid 5,6 kg 2,5 molale Natronlauge hinzugegeben. Der Feststoff wird mittels Zentrifugation abgetrennt und mit 0,5 kg destilliertes Wasser gewaschen. Nach Trocknung werden 0,5 kg eines Calciumhydroxides (14) mit einer Reinheit von ca. 90 % erhalten.

Die 15,6 kg des gewonnenen Filtrates (Zusammensetzung nachfolgend) werden der bipolaren elektrodialytischen Salzspaltung (15) unterworfen:

| Hauptelemente | Na | Cl | Ca |
|---|---|---|---|
| Gehalt [Gew.-%] | 2,2 | 4,3 | 0,1 |

Der Membranstack, ein Typ 100 (Deukum GmbH) wird mit 10 Zellpaaren (0,1 m² Zellpaargesamtfläche) Neosepta® CMX-, AMX- und BP1-Membranen, sowie Polypropylen Spacern bestückt. Als Elektrolyt werden 5 kg einer hochreinen 5 Gew.-%igen Phosphorsäure eingesetzt. Im Säure- (4,0 kg) und Konzentrat-Prozesskreislauf (3,0 kg) wird destilliertes Wasser vorgelegt.

Bei einer angelegten Spannung von 17 V wird nach einer kurzen Anlaufphase eine Stromstärke von 6,3 A gemessen. Nach Beendigung der elektrodialytischen Umsetzung werden im Säurekreislauf ca. 6,7 kg einer ca. 2,8 molalen Salzsäure (16) mit einer Reinheit von 95 Gew.-% (Hauptverunreinigung Natriumchlorid) erhalten. Im Basenkreislauf werden 5,9 kg einer 2,5 molalen Natronlauge (17) mit einer Reinheit von ca. 99 % erhalten, die vorteilhaft wieder zur Fällung von Aluminium- und Eisenphosphat und TCP (10) verwendet werden kann. Im Diluat verbleiben 10,0 kg Wasser mit einem Natrium-Gehalt < 1 g/L.

### Ausführungsbeispiel 3 - Gewinnung von Phosphorsäure aus Rohphosphat

1,0 kg Rohphosphat mit nachfolgender Zusammensetzung

| Hauptelemente | P | Ca | Cl | Si | Fe |
|---|---|---|---|---|---|
| Gehalt [Gew.-%] | 18,5 | 43,7 | 4,3 | 0,3 | 0,1 |

werden in einem 15 L Aufschlussbehälter mit 8,3 kg einer 2,8 molalen Salzsäure zusammengegeben und für ca. 20 Minuten unter ständigem Rühren bei Umgebungstemperatur (25 °C) aufgeschlossen. Im Anschluss erfolgt eine Fest-Flüssig-Trennung durch Unterdruckfiltration. Die Zusammensetzung des erhaltenen klaren Filtrats (9,3 kg) wurde wie folgt analysiert:

| Hauptelemente | P | Ca | Cl | Fe |
|---|---|---|---|---|
| Gehalt [Gew.-%] | 2,0 | 4,7 | 9,2 | 0,1 |

Der feste Rückstand (10 g) wurde mit 10 g destilliertem Wasser gewaschen und zu > 80% als Siliciumdioxid analysiert. Das klare Filtrat wird nachfolgend elektrodialytisch aufgearbeitet. Der Membranstack, ein Typ 100 (Deukum GmbH) wird mit 10 Zellpaaren (0,1 m² Zellpaargesamtfläche) Neosepta® CMX-, ACS- und Polypropylen Spacern bestückt. Als Elektrolyt werden 5 kg einer hochreinen 5 Gew.-%igen Phosphorsäure eingesetzt. Im Konzentrat werden 6 kg destilliertes Wasser vorgelegt. Bei einer angelegten Spannung von 5 V wird nach einer kurzen Anlaufphase eine konstante Stromstärke von 3,0 A bestimmt. Der Prozess wird beendet, wenn im Diluat ein Calcium-Gehalt < 0,05 Gew.-% nachgewiesen werden kann. Die Rohphosphorsäure (ca. 3,7 kg) setzt sich nach der elektrodialytischen Behandlung wie folgt zusammen:

| Hauptelemente | P | Ca | Cl | Fe |
|---|---|---|---|---|
| Gehalt [Gew.-%] | 3,9 | < 0,05 | < 0,05 | 0,1 |

Der Konzentrat-Kreislauf (11,6 kg) weist folgende Zusammensetzung auf:

| Hauptelemente | P | Ca | Cl | Fe |
|---|---|---|---|---|
| Gehalt [Gew.-%] | 0,4 | 3,8 | 7,4 | < 0,1 |

Mittels Rotationsverdampfung werden 3,7 kg der Rohphosphorsäure auf eine Konzentration von 75 Gew.-% Phosphorsäure eingeengt. Die erhaltene konzentrierte Phosphorsäure (0,5 kg) weist eine Reinheit von ca. 99 Gew.-% auf. Um eine hochreine Phosphorsäure zu erhalten, kann analog zu Ausführungsbeispiel 1 und 2 eine extraktive Aufreinigung erfolgen. Eine Säurerückgewinnung kann aus dem Konzentrat-Kreislauf der Elektrodialyse durchgeführt werden (siehe Ausführungsbeispiel 1 und 2).

### Ausführungsbeispiel 4 - Gewinnung von Phosphorsäure aus kalziniertem Struvit

1,0 kg eines bei 550 °C kalziniertem Struvits mit nachfolgender Zusammensetzung

| Hauptelemente | P | Mg | Cl | Si | Fe | Ca |
|---|---|---|---|---|---|---|
| Gehalt [Gew.-%] | 24,0 | 17,0 | 0,3 | 3,0 | 2,6 | 0,6 |

werden in einem 10 L Aufschlussbehälter mit 4,2 kg einer 4,0 molalen Salzsäure zusammengegeben und für ca. 20 Minuten unter ständigem Rühren bei Umgebungstemperatur (25 °C) aufgeschlossen. Im Anschluss erfolgt eine Fest-Flüssig-Trennung durch Unterdruckfiltration. Die Zusammensetzung des erhaltenen klaren Filtrats (5,1 kg) wurde wie folgt analysiert:

| Hauptelemente | P | Mg | Cl | Fe | Ca |
|---|---|---|---|---|---|
| Gehalt [Gew.-%] | 3,4 | 2,5 | 10,1 | 0,5 | 0,1 |

Der feste Rückstand (150 g) wurde mit 500 g destilliertem Wasser gewaschen und zu > 70% als Siliciumdioxid analysiert. Das klare Filtrat wird nachfolgend elektrodialytisch aufgearbeitet. Der Membranstack, ein Typ 100 (Deukum GmbH) wird mit 10 Zellpaaren (0,1 m² Zellpaargesamtfläche) Neosepta® CMX-, ACS- und Polypropylen Spacern bestückt. Als Elektrolyt werden 5 kg einer hochreinen 5 Gew.-%igen Phosphorsäure eingesetzt. Im Konzentrat werden 6 kg destilliertes Wasser vorgelegt. Bei einer angelegten Spannung von 5 V wird nach einer kurzen Anlaufphase eine konstante Stromstärke von 3,0 A bestimmt. Der Prozess wird beendet, wenn im Diluat ein Magnesium-Gehalt < 0,05 Gew.-% nachgewiesen werden kann. Die Rohphosphorsäure (ca. 2,3 kg) setzt sich nach der elektrodialytischen Behandlung wie folgt zusammen:

| Hauptelemente | P | Mg | Cl | Fe | Ca |
|---|---|---|---|---|---|
| Gehalt [Gew.-%] | 5,9 | < 0,05 | < 0,05 | 1,0 | < 0,05 |

Analog zu Ausführungsbeispiel 1-3 erfolgt die Konzentrierung zur technischen Phosphorsäure. Um eine hochreine Phosphorsäure zu erhalten, kann analog zu Ausführungsbeispiel 1 und 2 anschließend eine extraktive Aufreinigung erfolgen.

Der Konzentrat-Kreislauf (8,8 kg) weist folgende Zusammensetzung auf:

| Hauptelemente | P | Mg | Cl | Fe | Ca |
|---|---|---|---|---|---|
| Gehalt [Gew.-%] | 0,4 | 1,4 | 6,6 | < 0,1 | < 0,1 |

Nach pH-Anhebung auf pH=8 durch Zugabe von Magnesiumhydroxid und Filtration des Konzentrat-Kreislaufes wird eine Lösung mit nachfolgender Zusammensetzung erhalten, welche als notwendige Magnesiumquelle der Struvitkristallisation zugeführt werden kann.

| Hauptelemente | P | Mg | Cl | Fe | Ca |
|---|---|---|---|---|---|
| Gehalt [Gew.-%] | < 0,05 | 1,7 | 6,4 | < 0,1 | < 0,1 |

### Bezugszeichen

1) Phosphorhaltige Rohstoffe
2) Chemischer Aufschluss,
3) Filtration,
4) Elektrodialyse (1),
5) Eindampfung,
6) Technische Phosphorsäure,
7) Extraktive Aufreinigung,
8) Eindampfung,
9) Hochreine Phosphorsäure,
10) Fällung Aluminium-, Eisenphosphat und TCP,
11) Filtration,
12) Fällung Calcium-/Magnesiumhydroxid,
13) Filtration,
14) Calcium-/Magnesiumhydroxid,
15) Elektrodialyse (2),
16) Salzsäure,
17) Natronlauge,
18) Klärschlammaschen,
19) Extraktive Aluminium- und Eisen-Teilabreicherung,
20) Eisen-Aluminium-Mischchlorid-Lösung,
21) Phosphorsäure-Prozesskreislauf (Diluat-Prozesskreislauf),
22) Kationenaustauschermembran,
23) Monoselektive Anionenaustauschermembran,
24) Calciumsalz-Prozesskreislauf (Konzentrat-Prozesskreislauf),
25) Natriumsalz-Prozesskreislauf (Diluat-Prozesskreislauf),
26) Bipolare Membran,
27) Anionenaustauschermembran,
28) Natriumhydroxid-Prozesskreislauf (Konzentrat-Prozesskreislauf),
29) Säure-Prozesskreislauf.

## Patentansprüche

1. Verfahren zur Herstellung von Phosphorsäure aus phosphorhaltigen Primär- und/oder Sekundärrohstoffen mittels Aufschluss der phosphorhaltigen Primär- und/oder Sekundärrohstoffe durch eine einwertige mineralische Aufschlusssäure und Separation von festen Rückständen zum Erhalt einer Aufschlusslösung, enthaltend Rohphosphorsäure und Calcium- und/oder Magnesiumsalze der Aufschlusssäure, **gekennzeichnet dadurch, dass** die Aufschlusslösung in einen Diluat-Prozesskreislauf einer Elektrodialysevorrichtung mit Anionen- und Kationenaustauschermembranen eingebracht wird, dass ein elektrisches Feld angelegt wird, wobei Calcium- und/oder Magnesiumionen und Aufschlusssäureanionen aus der Aufschlusslösung in einen Konzentrat-Prozesskreislauf der Elektrodialysevorrichtung migrieren und dabei von der Rohphosphorsäure im Diluat abgetrennt werden, dass nach der Abtrennung die Elektrodialyse gestoppt und dass das Diluat, enthaltend die Rohphosphorsäure weiter konzentriert und die konzentrierte Rohphosphorsäure zur Produktphosphorsäure aufgearbeitet wird.

2. Verfahren nach Anspruch 1, **gekennzeichnet dadurch, dass** als phosphorhaltige Primärrohstoffe phosphorhaltige Erze verwendet werden.

3. Verfahren nach einem der Ansprüche 1 oder 2, **gekennzeichnet dadurch, dass** die phosphorhaltigen Sekundärrohstoffe ausgewählt sind aus Tier- und Knochenmehlaschen, Klärschlammaschen, technischen Magnesiumphosphaten, thermisch vorbehandelten Struviten (Magnesiumammoniumphosphat, MAP, (NH₄)Mg[PO₄]·6H₂O), Tricalciumphosphat (Ca₃(PO₄)₂), phosphathaltigen Industrieabfällen, Wirtschaftsdüngern und/oder Leuchtstoffabfällen.

4. Verfahren nach einem der Ansprüche 1 bis 3, **gekennzeichnet dadurch, dass** die einwertige mineralische Säure ausgewählt aus Salzsäure und/oder Salpetersäure ist.

5. Verfahren nach einem der Ansprüche 1 bis 4, **gekennzeichnet dadurch, dass** der Aufschluss der phosphorhaltigen Primär- und/oder Sekundärrohstoffe bei einer Temperatur von 1 bis 40 °C erfolgt.

6. Verfahren nach einem der Ansprüche 1 bis 5, **gekennzeichnet dadurch, dass** vor der Elektrodialyse eine Teilabreicherung von Metallen aus der Aufschlusslösung mittels Flüssig-Flüssig-Extraktion erfolgt.

7. Verfahren nach Anspruch 6, **gekennzeichnet dadurch, dass** die Metalle ausgewählt sind aus Aluminium und/oder Eisen.

8. Verfahren nach einem der Ansprüche 1 bis 7, **gekennzeichnet dadurch, dass** eine anschließende weitere Konzentrierung der Rohphosphorsäure auf einen H₃PO₄-Gehalt von 40 bis 70 Gew.-% der Gesamtmasse der Rohphosphorsäure erfolgt.

9. Verfahren nach Anspruch 8, **gekennzeichnet dadurch, dass** die konzentrierte RohPhosphorsäure anschließend mittels Flüssig-Flüssig-Extraktion gereinigt wird.

10. Verfahren nach einem der Ansprüche 1 bis 9, **gekennzeichnet dadurch, dass** zusätzlich die Rückgewinnung der einwertigen mineralischen Säure aus dem Konzentrat-Prozesskreislauf mittels bipolarer Elektrodialyse erfolgt.

11. Verfahren nach Anspruch 10, **gekennzeichnet dadurch, dass** vor der bipolaren Elektrodialyse Calcium- und/oder Magnesiumionen in Form von Calcium- und/oder Magnesiumhydroxid aus dem Konzentrat-Prozesskreislauf ausgefällt werden.

## Claims

1. A method for the preparation of phosphoric acid from phosphorus-containing primary and/or secondary raw materials by digestion of the phosphorus-containing primary and/or secondary raw materials by a monovalent mineral digestive acid, and separation of solid residues to obtain a digestion solution containing crude phosphoric acid and calcium and/or magnesium salts of the digestion acid, **characterised in that** the digestion solution is introduced into a diluate process cycle of an electrodialysis apparatus with anion and cation exchange membranes, that an electric field is applied, wherein calcium and/or magnesium ions and digestion acid anions migrate from the digestion solution into a concentrate process cycle of the electrodialysis apparatus, and in doing so are separated from the crude phosphoric acid in the diluate, that after the separation the electrodialysis is stopped and that the diluate containing the crude phosphoric acid is concentrated further and that the concentrated crude phosphoric acid is processed up to the product phosphoric acid.

2. The method according to claim 1, **characterised in that** phosphorus-containing ores are used as phosphorus-containing primary raw materials.

3. The method according to any one of claims 1 or 2, **characterised in that** the phosphorus-containing secondary raw materials are selected from animal and bone flour ash, sewage sludge ash, technical magnesium phosphates, thermally pretreated struvites (magnesium ammonium phosphate, MAP, (NH₄)Mg[PO₄]·6H₂O), tricalcium phosphate (Ca₃(PO₄)₂), phosphate-containing industrial waste, farm fertilizers and/or luminescent waste.

4. The method according to any one of claims 1 to 3, **characterised in that** the monovalent mineral acid is selected from hydrochloric acid and/or nitric acid.

5. The method according to any one of claims 1 to 4, **characterised in that** the digestion of the phosphorus-containing primary and/or secondary raw materials takes place at a temperature of 1 to 40 °C.

6. The method according to one of claims 1 to 5, **characterised in that** before the electrodialysis a partial depletion of metals from the digestion solution by means of liquid-liquid extraction takes place.

7. The method according to claim 6, **characterised in that** the metals are selected from aluminium and/or iron.

8. The method according to any one of claims 1 to 7, **characterised in that** a subsequent further concentration of the crude phosphoric acid to a H₃PO₄-content of 40 to 70 wt.-% of the total mass of the crude phosphoric acid takes place.

9. The method according to claim 8, **characterised in that** the concentrated crude phosphoric acid is subsequently purified by means of liquid-liquid extraction.

10. The method according to any one of claims 1 to 9, **characterised in that**, additionally, recovery of monovalent mineral acid from the concentrate process cycle by means of bipolar electrodialysis takes place.

11. The method according to claim 10, **characterised in that** prior to the bipolar electrodialysis calcium and/or magnesium ions are precipitated in the form of calcium and/or magnesium hydroxide from the concentrate process cycle.

## Revendications

1. Procédé de production d'acide phosphorique à partir de matières premières primaires et/ou secondaires contenant du phosphore, moyennant une digestion, par un acide de digestion minéral monovalent, des matières premières primaires et/ou secondaires contenant du phosphore, et une séparation de résidus solides pour obtenir une solution de digestion contenant de l'acide phosphorique brut et des sels de calcium et/ou de magnésium de l'acide de digestion, **caractérisé en ce que** la solution de digestion est introduite dans un circuit de traitement de diluat d'un dispositif d'électrodialyse à membranes échangeuses d'anions et de cations, **en ce qu'**un champ électrique est appliqué, les ions calcium et/ou magnésium et les anions d'acide de digestion migrent de la solution de digestion dans un circuit de traitement de concentrat du dispositif d'électrodialyse, et sont ainsi séparés de l'acide phosphorique brut dans le diluat, **en ce que** l'électrodialyse est interrompue après la séparation, et **en ce que** le diluat contenant l'acide phosphorique brut est davantage concentré et que l'acide phosphorique brut concentré est transformé en produit d'acide phosphorique.

2. Procédé selon la revendication 1, **caractérisé en ce que** des minerais contenant du phosphore sont utilisés comme matières premières primaires contenant du phosphore.

3. Procédé selon l'une des revendications 1 ou 2, **caractérisé en ce que** les matières premières secondaires contenant du phosphore sont choisies parmi des cendres de farine animale et d'os, des cendres de boues d'épuration, des phosphates de magnésium techniques, des struvites prétraités thermiquement (phosphate d'ammonium-magnésium (MAP), (NH₄)Mg[PO₄]·6H₂O), phosphate tricalcique (Ca₃(PO₄)₂), des déchets industriels contenant du phosphate, des engrais agricoles et/ou des déchets fluorescents.

4. Procédé selon l'une des revendications 1 à 3, **caractérisé en ce que** l'acide minéral monovalent est choisi parmi l'acide chlorhydrique et/ou l'acide nitrique.

5. Procédé selon l'une des revendications 1 à 4, **caractérisé en ce que** la digestion des matières premières primaires et/ou secondaires contenant du phosphore a lieu à une température de 1 à 40 °C.

6. Procédé selon l'une des revendications 1 à 5, **caractérisé en ce qu'**une élimination partielle de métaux de la solution de digestion a lieu, au moyen d'une extraction liquide-liquide, avant l'électrodialyse.

7. Procédé selon la revendication 6, **caractérisé en ce que** les métaux sont choisis parmi l'aluminium et/ou le fer.

8. Procédé selon l'une des revendications 1 à 7, **caractérisé en ce qu'**une concentration supplémentaire ultérieure de l'acide phosphorique brut a lieu à une teneur en H₃PO₄ de 40 à 70 % en poids de la masse totale de l'acide phosphorique brut.

9. Procédé selon la revendication 8, **caractérisé en ce que** l'acide phosphorique brut concentré est ensuite purifié au moyen d'une extraction liquide-liquide.

10. Procédé selon l'une des revendications 1 à 9, **caractérisé en ce qu'**en outre, la récupération de l'acide minéral monovalent du circuit de traitement du concentrat a lieu au moyen d'une électrodialyse bipolaire.

11. Procédé selon la revendication 10, **caractérisé en ce que**, avant l'électrodialyse bipolaire, les ions calcium et/ou magnésium sont précipités sous forme d'hydroxyde de calcium et/ou de magnésium hors du circuit de traitement du concentrat.
